# EUROPÄISCHE PATENTSCHRIFT

(11) **EP 0 732 878 B1**
(45) Veröffentlichungstag und Bekanntmachung des Hinweises auf die Patenterteilung: **17.12.1997**
(21) Anmeldenummer: 95904421.5
(22) Anmeldetag: 05.12.1994
(51) Int. Cl.: A21B 3/13, F24C 15/16

(54) **VERFAHREN UND VORRICHTUNG ZUM BACKEN VON KUCHEN**
CAKE BAKING PROCESS AND DEVICE
PROCEDE ET DISPOSITIF DE CUISSON DE GATEAUX

(30) Priorität: 07.12.1993 DE 9318659 U; 13.08.1994 DE 9413132 U; 24.08.1994 DE 4429930; 15.10.1994 DE 9416642 U
(43) Veröffentlichungstag der Anmeldung: 25.09.1996
(73) Patentinhaber: S & R Maschinenbau Gesellschaft mit beschränkter Haftung, 35315 Homberg/Ohm (OT Büssfeld) (DE)
(72) Erfinder: RÖCKER, Hans, D-35315 Homberg/Ohm (OT Büssfeld) (DE)
(74) Vertreter: Knefel, Cordula, Dipl.-Phys.
(86) Internationale Anmeldenummer: EP9404042
(87) Internationale Veröffentlichungsnummer: WO9515693

(56) Entgegenhaltungen:
- EP-A- 0 235 037
- CH-A- 663 515
- DE-A- 2 840 538
- DE-C- 557 377
- DE-C- 666 638
- DE-U- 8 810 779
- DE-U- 9 114 841
- DE-U- 9 202 512
- DE-U- 9 307 492
- GB-A- 2 272 151
- US-A- 2 663 449
- US-A- 3 109 361
- US-A- 4 156 516
- US-A- 4 452 419

## Beschreibung

Die Erfindung betrifft ein Verfahren sowie eine Vorrichtung zum Backen von Kuchen.

Nach dem Stand der Technik werden zum Backen von Kuchen einteilige Kuchenformen, beispielsweise Kastenformen oder Gugelhupfformen verwendet.

Zum Stand der Technik gehören weiterhin zweiteilige Backformen, sogenannte Springformen, die aus einem Bodenblech und einem darum federnd befestigten Backring bestehen. Ein Beispiel ist aus dem Dokument US-A-4 156 516 bekannt.

Diese Formen haben den Nachteil, daß für jede Kuchenart und Kuchengröße eine gesonderte Backform notwendig ist, so daß sich im Haushalt viele verschiedene Backformen ansammeln.

Darüber hinaus müssen diese Backformen vor dem Backen immer eingefettet werden, damit sich der Kuchen nach dem Backen einfach aus der Backform herauslöst.

Die zum Stand der Technik gehörenden Kuchenformen werden zum Backen auf ein Backblech oder dergleichen gestellt. Hierbei wirkt sich nachteilig aus, daß erst das Backblech und anschließend die Backform durch die warme des Backofens erhitzt werden müssen, bis die Bodenwärme an den Kuchenteig dringt.

Darüber hinaus ist der Wärmeübergang auf den Teig von den verschiedenen Seiten her äußerst ungleichmäßig. Am Boden der Backform müssen Backblech und Boden der Backform erhitzt werden, an der Seite wird der seitliche Teil der Backform erhitzt. Die Oberfläche des Kuchenteiges liegt üblicherweise frei, so daß diese Oberfläche der stärksten Hitzeeinwirkung ausgesetzt ist.

Dies ist unabhängig davon, ob mit Ober- oder Unterhitze oder im Heißluft-Umwälzverfahren gebacken wird.

Der Erfindung liegt das technische Problem zugrunde, ein Verfahren zum Backen von Kuchen anzugeben, bei dem nur sehr wenige Hilfsmittel benötigt werden, um eine große Anzahl verschiedenster Kuchen in Form und Größe zu backen, und bei dem ein gleichmäßiger oder nahezu gleichmäßiger Wärmeübergang auf den Kuchenteig erfolgt.

Diese Aufgabe wird durch die Merkmale des Anspruches 1 gelöst.

Dadurch, daß auf nur einen Backofenrost sämtliche Backrahmen lose aufgesetzt werden, dient der Backofenrost als Bodenblech für sämtliche Backrahmen.

Darüber hinaus sind die Backrahmen größenverstellbar. Hierdurch wird eine weitere erhebliche Einsparung an Einzelteilen erzielt. Beispielsweise können mit einem kreisförmigen Backrahmen Kuchen mit den verschiedensten Durchmessern, wie zum Beispiel 20, 26, 28, 30 Zentimetern gebacken werden. Es sind auch sämtliche Zwischengrößen möglich.

Mit dem größenverstellbaren rechteckigen Backrahmen läßt sich beispielsweise ein Kastenkuchen wie auch ein größerer Blechkuchen backen, ohne daß hierfür verschiedene Backformen notwendig wären.

Dadurch, daß der Teig direkt auf dem Backofenrost angeordnet wird, wird eine sehr gute Wärmeübertragung auf den Kuchenteig erreicht.

Darüber hinaus kann der Backrahmen ebenfalls gitterförmig ausgebildet sein, so daß eine sehr gute Wärmeübertragung auf den Kuchenteig erreicht wird.

Hat der Kuchenteig eine etwas flüssigere Konsistenz, so kann zwischen dem Backofenrost und dem Backrahmen eine Backfolie vorgesehen werden. Diese Backfolie vermindert die Wärmeübertragung nur unwesentlich.

Ein weiterer Vorteil des erfindungsgemäßen Verfahrens ist, daß ein Einfetten der Backformen entfällt. Der Kuchenteig wird direkt auf den Backofenrost aufgebracht oder aber auch auf die Backfolie. Hierbei ist ein Einfetten nicht notwendig.

Auch ein Einfetten des Backrahmens ist nicht notwendig. Der Kuchen kann nach dem Backen leicht mit einem Messer aus dem Backrahmen herausgelöst werden.

Die Verwendung des Backofenrostes mit dem Backrahmen hat den weiteren Vorteil, daß der Kuchen, wenn er sich noch in dem Backrahmen befindet, auf eine Tortenplatte gesetzt werden kann, wo er beispielsweise mit Tortenguß oder Sahne bestrichen wird. Hierbei dient der Backrahmen als Tortenring. Nachdem der Tortenguß oder die Sahne steif geworden ist, kann der Backrahmen endgültig entfernt werden. Hierbei erspart man sich das gesonderte Anbringen eines Tortenringes, der darüber hinaus im Handel nur als kreisförmiger Tortenring erhältlich ist. Für rechteckige Kuchen oder Kuchen mit anderen Grundformen sind derartige Tortenringe nicht erhältlich.

Als Backofenrost wird vorteilhaft ein Blech mit Durchbrüchen verwendet, auf dem der Kuchenteig anordbar ist. Durch den Backofenrost kann durch die Durchbrüche von unten her die zum Backen erforderliche Wärme an den Teig herangeführt werden. Ist der Teig sehr flüssig, so daß er durch die Durchbrüche fließen würde, kann man auf den Backofenrost ein Backpapier oder eine Backfolie legen. Hierdurch wird der Wärmeübergang nur unwesentlich behindert.

Der Backofenrost ist erfindungsgemäß gitterförmig ausgebildet. Die Durchbrüche können eine quadratische, rechteckige, kreisförmige Form oder die Form eines regelmäßigen Sechseckes aufweisen.

Der Backofenrost kann auf dem üblichen Backblech im Ofen oder auf dem üblichen gitterförmigen Backofenrost im Backofen angeordnet werden, wenn die Ränder des erfindungsgemäßen Backofenrostes nach unten abgewinkelt sind und ebenfalls Durchbrüche aufweisen. Bei dieser Ausbildung kann die heiße Luft unter den Backofenrost strömen, um von hier aus wiederum durch die Durchbrüche an das aufgelegte Backgut zu gelangen.

Vorteilhaft sind die Kanten des wenigstens einen nach unten abgewinkelten Seitenrandes an den Ecken des Bleches miteinander verschweißt.

Der Backofenrost kann den im Backofen vorgesehenen gitterförmigen Backofenrost ersetzen, wenn er dessen Abmessungen aufweist.

Auf den Backofenrost kann ein beliebiger Backrahmen aufgesetzt werden. Der Backrahmen kann die verschiedensten Formen und Abmessungen aufweisen. Beispielsweise kann er kreisförmig oder rechteckig sein. Er kann aber auch beliebige andere Formen aufweisen.

Der Backrahmen selbst wiederum kann auch Durchbrüche aufweisen in gleicher Form wie der Backofenrost. Hierdurch wird die Wärmeübertragung auf den Kuchenteig erheblich verbessert.

Vorteilhaft werden Backrahmen verwendet, die in ihrer Größe verstellbar sind.

Der runde, in seiner Größe verstellbare Backrahmen weist hierzu ein offenes Ende auf. Die beiden Seitenflächen des offenen Endes des Backrahmens überlappen sich und werden mit zwei Klammern zusammengehalten. Die sich überlappenden Endflächen können zusammen- oder auseinandergeschoben werden, so daß sich der Durchmesser des Backrahmens verändert.

Ist der Backrahmen rechteckig, so weist er vorzugsweise vier Segmente auf, die aus jeweils zwei rechtwinklig zueinander angeordneten Seitenflächen bestehen. Die Seitenflächen von je zwei Segmenten überlappen sich jeweils, so daß sich ein rechteckiger Backrahmen ergibt, wenn die vier Segmente zusammengesteckt werden.

Die Seitenflächen werden mittels verschiebbarer Klammern zusammengehalten. Vorteilhaft sind je zwei Klammern auf jeder Seite des Backrahmens vorgesehen.

Je eine Klammer kann auch fest mit einer Seitenfläche verbunden sein. Dies hat den Vorteil, daß die Seitenfläche nicht aus der Klammer herausrutschen kann. Hierdurch wird die Handhabbarkeit des Rahmens erheblich verbessert.

Ist der Backrahmen auf die kleinste Größe zusammengeschoben, so überlappen sich die Seitenflächen der einzelnen Segmente vollständig.

Wird der Backrahmen vergrößert, so überlappen sich die Seitenflächen der Segmente nur noch teilweise. Bei größter Größe des Backrahmens überlappen sich die Seitenflächen nur noch an ihren Enden.

Bei der Vergrößerung oder Verkleinerung des Backrahmens werden die Seitenflächen durch die Klammern geführt.

Vorteilhaft weisen die in der Größe verstellbaren Backrahmen eine Skaleneinteilung auf, so daß bei den runden Backrahmen ablesbar ist, welchen Durchmesser sie haben. Bei dem rechteckigen Backrahmen ist vorzugsweise auf jeder Seite des Backrahmens eine Skaleneinteilung vorgesehen, damit eine rechteckige oder quadratische Form erreicht wird und keine windschiefe Form.

Die Erfindung betrifft in weiterer Ausgestaltung einen Backofenrost als Träger für eine Kuchenform oder eines zu bratenden Fleischstückes, aber auch für zu dörrendes Obst oder dergleichen mehr.

Nach dem Stand der Technik besteht der Backofenrost aus Gitterstäben.

Zum Backen eines Kuchens wird nach dem Stand der Technik in dem Backofen auf dem Backofenrost die Kuchenform angeordnet, in der der zu backende Teig enthalten ist. Kuchenformen weisen einerseits einen seitlichen Rand auf, damit sich der Teig beim Backen nicht über die Bodenfläche der Form hinaus ausdehnen kann, sowie andererseits eine geschlossene Bodenfläche, auf der die Teigmasse aufliegt. Derartige Backformen werden entweder auf den Gitterrost des Backofens gesetzt oder auf ein dort angeordnetes Blech, das üblicherweise im Backofen vorgesehen ist, um beim Braten von Fleischstücken den austretenden Fleischsaft aufzufangen.

Es hat sich gezeigt, daß bei Verwendung von Backformen beim Backen von Kuchen der Wärmeübergang auf den Teig von den verschiedenen Seiten her äußerst ungleichmäßig ist, und zwar sowohl dann, wenn der Teig mit Ober- und Unterhitze gebacken wird, als auch dann, wenn der Teig im Heißluft-Umwälzverfahren gebacken wird. Da die Oberfläche des Backgutes (Kuchenteiges) üblicherweise freiliegt, ist diese Oberfläche stets der stärksten Hitzeeinwirkung ausgesetzt. Die übrigen Teile des zu backenden Teiges, welche auf dem Bodenblech der Backform liegen und/oder an den Seitenrändern der Form anliegen, erhalten ihre Backwärme nur durch Wärmeübergang durch die Backform, so daß der Teig hier langsamer erhitzt wird. Ist die Kuchenform nicht auf dem üblicherweise vorgesehenen Gitterrost angeordnet, sondern der Bequemlichkeit halber auf einem Blech zum Auffangen des Bratensaftes beim Braten eines Fleischstückes, muß die Hitze zusätzlich das Backofenblech durchdringen, um zum Bodenblech der Kuchenform zu gelangen und von hier aus zum zu backenden Teig. Da die üblichen Backformen undurchsichtig sind, kann man nicht feststellen, ob ein zu backender Kuchen zuviel Oberhitze, Unterhitze oder Seitenhitze erhält, mit anderen Worten, es bedarf einer längeren Erfahrung, bis man auf Anhieb Kuchen erhält, welche von allen Seiten her eine gleichmäßige Bräunung zeigen und durchgebacken sind.

Darüber hinaus verlängert der zum Backen notwendige Wärmeübergang durch die Form und gegebenenfalls durch das Backofenblech auf den Teig die Backzeit, wodurch Wärmeenergie verschwendet wird.

Der Erfindung liegt das weitere technische Problem zugrunde, einen Backofenrost anzugeben, auf dem unmittelbar der Kuchenteig, das heißt ohne Form und Bodenblech angeordnet werden kann oder aber auch Fleischstücke zum Braten, derart, daß auf das aufgelegte Gut von allen Seiten her ein gleichmäßiger oder nahezu gleichmäßiger Wärmeübergang erfolgt, so daß bei der Anwendung des erfindungsgemäßen Backofenrostes kein Wärmeverlust durch Wärmeübergang der Backofenwärme durch die Backform oder durch ein Soßenauffangblech eintritt.

Diese Aufgabe wird durch das kennzeichnende Merkmal des Anspruches 24 gelöst.

Dadurch, daß jetzt als Backofenrost ein Blech mit Durchbrüchen verwendet wird, auf dem der Kuchenteig anordbar ist, kann durch diese Durchbrüche von unten her an den Teig die zum Backen erforderliche Heißluft herangeführt werden. Ist der Teig sehr flüssig, so daß er durch die Durchbrüche fließen würde, kann man in bekannter Weise auf das erfindungsgemäße Blech eine Backfolie oder ein Backpapier legen. Eine solche Folie oder ein solches Backpapier behindert den Wärmeübergang nur unwesentlich.

Das erfindungsgemäße Blech läßt sich auf dem üblichen gitterförmigen Backofenrost anordnen, auch auf einem im Backofen vorgesehenen Backblech oder Soßenauffangblech, wenn gemäß dem Anspruch 28 die Ränder des Bleches in weiterer Ausgestaltung der Erfindung nach unten abgewinkelt sind und ebenfalls Durchbrüche aufweisen. Bei dieser Ausbildung kann die heiße Luft unter das eigentliche Blech strömen, um von hier aus wiederum durch die Durchbrüche an das aufgelegte Gut zu gelangen.

Das als Backofenrost ausgebildete Blech kann den im Backofen vorgesehenen Backofenrost ersetzen, wenn es dessen Abmessungen aufweist. Es kann aber auch mit demselben Erfolg auf einen dort vorgesehenen Backofenrost oder ein dort vorgesehenes Soßenauffangblech gelegt werden, ohne den Wärmeübergang auf das zu behandelnde Gut zu beeinflussen. In diesem Fall kann das erfindungsgemäße Blech auch jede andere Gestalt aufweisen. Mit anderen Worten, das erfindungsgemäße Blech stellt sozusagen ein eigenständiges Bodenblech für eine Kuchenform dar oder eine eigenständige Unterlage für ein zu bratendes Fleischstück. Das Blech kann aber auch nach dem Back- oder Bratvorgang aus dem Ofen mit dem aufliegenden Gut herausgenommen und abgestellt werden, um zum Beispiel einen gebackenen Kuchen abkühlen zu lassen, das heißt als Auskühlgitter verwendet werden.

Das Blech hat den weiteren Vorteil, daß auf ihm die Randform für einen Kuchen, zum Beispiel ein Tortenring, in einfacher Weise aufgesetzt werden kann, gegebenenfalls auf das auf das Blech gelegte Backpapier, so daß der Rand des auf dem Blech ausgelegten Teiges und insbesondere des fertigen Backgutes in bekannter Weise begrenzt wird und eine gewünschte Form erhält. Bei dieser Anwendung dient das Blech sozusagen als Bodenblech für die Kuchenform. Erfindungsgemäß weist die Randform ebenfalls Durchbrüche auf, so daß bei Verwendung einer solchen Randform von der Seite her ebenfalls Heißluft bis an den Teig strömen kann.

Die Form der Durchbrüche in dem Blech und in den abgewinkelten Seitenrändern des Bleches, aber auch in der Randform, kann völlig beliebig sein. Vorteilhaft ist es, die Durchbrüche so zu gestalten, daß zwischen ihnen nur schmale Stege verbleiben, die dem Blech eine genügende Steifigkeit geben, so daß sich das Blech nicht durchbiegt und/oder verbiegt, sondern vielmehr auch nach längerem Gebrauch in stabiler Lage im Backofen angeordnet werden kann. Die abgewinkelten Ränder des Bleches gestatten es, die Backform ohne Behinderung ihrer Backwirkung auf einer blechförmigen Unterlage im Backofen anzuordnen, beispielsweise auf dem erwähnten Soßenauffangblech, ohne daß hierdurch die Hitzezufuhr zum Teig behindert wird. Außerdem verstärken die abgebogenen Seitenränder das Blech, so daß es vollkommen biegesteif wird.

Die Erfindung betrifft in weiterer Ausgestaltung einen Backrahmen zum Backen von Kuchen, der auf einen Backofenrost aufgesetzt wird.

Wie oben beschrieben kann auf einen Backofenrost ein Backrahmen aufgesetzt werden, so daß der Backofenrost das Bodenblech für die aufsetzbare Randform bildet. Bei dieser Ausführungsform können Backrahmen in den unterschiedlichsten Ausführungsformen bezüglich der Größe und der äußeren Form des Rahmens auf ein und denselben Backofenrost aufgesetzt werden. Es wird hierbei aber für jede Kuchenform und Größe jeweils ein gesonderter Backrahmen benötigt. Man erhält mit einem Backofenrost und den verschiedenen Backrahmen mehrere Kuchenformen. Diese Kuchenformen weisen die oben genannten Vorteile auf.

Rezepte in Kochbüchern geben Teigmengen für unterschiedliche Kuchengrößen an. So wird beispielsweise angegeben, daß der vorbereitete Teig in eine Kuchenform mit 26, 28 oder 30 cm Durchmesser eingefüllt werden soll, oder daß rechteckige oder quadratische Kuchen in Formen verschiedener Größe, beispielsweise 30 x 30 cm oder 35 x 35 cm, zu backen sind.

Nach dem Stand der Technik benötigt man hierzu Backformen in mehreren Größen, also viele unterschiedliche Backformen.

Andererseits ist es heutzutage auch üblich, zwei kleinere Kuchen mit einem Durchmesser von beispielsweise 20 cm und weniger zu backen, anstelle eines großen Kuchens. Auch hierfür benötigt man nach dem Stand der Technik wiederum gesonderte Backformen.

Der Erfindung liegt das weitere technische Problem zugrunde, einen Backrahmen anzugeben, der für Kuchen mit unterschiedlichen Größenabmessungen verwendbar ist und der darüber hinaus leicht handhabbar bezüglich der Größeneinstellung ist.

Dieses technische Problem wird durch die Merkmale des Oberbegriffes und des kennzeichnenden Teiles des Anspruches 47 gelöst.

In Weiterentwicklung der Erfindung wird nun ein Backrahmen angegeben, der in seiner Größe verstellbar ist. Dies hat den Vorteil, daß nur noch ein Backrahmen für Kuchen mit unterschiedlichen Größenabmessungen erforderlich ist.

Der erfindungsgemäße Backrahmen kann rechteckig, aber auch rund sein.

Der rechteckige Backrahmen besteht aus vier Segmenten, die wiederum aus jeweils zwei rechtwinklig zueinander angeordneten Seitenflächen bestehen.

Die Seitenflächen von je zwei Segmenten überlappen sich jeweils, so daß sich ein rechteckiger Backrahmen ergibt, wenn die vier Segmente zusammengesteckt werden.

Die Seitenflächen werden mittels lose verschiebbarer Klammern zusammengehalten. Vorteilhaft sind je zwei Klammern auf jeder Seite des Backrahmens vorgesehen. Je eine Klammer kann auch fest mit einer Seitenfläche verbunden sein. Dies hat den Vorteil, daß die Seitenfläche nicht aus der Klammer herausrutschen kann. Hierdurch kann die Handhabbarkeit des Rahmens erheblich verbessert werden.

Ist der Backrahmen auf die kleinste Größe zusammengeschoben, so überlappen sich die Seitenflächen der einzelnen Segmente vollständig.

Wird der Backrahmen vergrößert, so überlappen sich die Seitenflächen der Segmente nur noch teilweise. Bei größter Größe des Backrahmens überlappen sich die Seitenflächen nur noch an ihren Enden.

Bei der Vergrößerung oder Verkleinerung des Backrahmens werden die Seitenflächen durch die Klammern geführt.

Da jede der vier Seiten des rechteckigen Backrahmens beliebig verstellbar ist, ist eine Skaleneinteilung auf jeder Seite des Backrahmens vorgesehen, um den Backrahmen möglichst genau in rechteckiger oder quadratischer Form einstellen zu können, damit windschiefe Kuchen vermieden werden.

Die Skaleneinteilung ist vorzugsweise außen am Backrahmen vorgesehen. Die Skaleneinteilung kann aus einer Strichskala bestehen, die auf der Außenfläche der innen liegenden Seitenfläche der beiden sich überlappenden Seitenflächen angeordnet ist. Bei Einstellung der Größe des Backrahmens kann so die äußere Seitenfläche mit ihrem Ende bis zu dem gewünschten Strich der Skaleneinteilung verschoben werden. Wird diese Einstellung auf allen vier Seiten des Backrahmens durchgeführt, erhält man die gewünschte rechteckige oder quadratische Form, ohne daß die Form windschief ist.

Der Backrahmen kann auch eine runde Form aufweisen. Hierzu ist ein Backring mit einem offenen Ende vorgesehen. Die beiden Seitenflächen am offenen Ende des Backringes überlappen sich wiederum und werden mit zwei Klammern zusammengehalten. Der Backrahmen kann nun auf beliebige Größe zusammen- oder auseinandergeschoben werden.

Auf der Außenfläche des Backrahmens ist auch hier wiederum eine Skaleneinteilung vorgesehen, anhand derer sich einfach ablesen läßt, welchen Durchmesser der Backrahmen nunmehr aufweist.

Die Erfindung betrifft in weiterer Ausgestaltung einen Backrahmen zum Backen von Kuchen, der auf einen Backofenrost aufsetzbar ist.

Die obengenannten Backrahmen weisen verschiedene Formen auf, beispielsweise runde oder eckige Formen, wie sie bei handelsüblichen Kuchenformen bekannt sind.

Die Backformen können aber auch sternförmige oder rosettenförmige Formen aufweisen.

Die Backrahmen werden auf einen Backofenrost aufgesetzt. In den von dem Backrahmen und dem Backofenrost begrenzten Raum wird Kuchenteig zum Backen eingefüllt.

Die Backformen können größenverstellbar sein, so daß man mit wenigen Backrahmen auskommt und mit diesen wenigen Backrahmen viele verschiedene Kuchen backen kann.

Das der Erfindung zugrundeliegende weitere technische Problem besteht darin, einen Backrahmen anzugeben, mit dem Kuchen verschiedenster Formen gebacken werden können, ohne daß für jede Kuchenform ein eigener Backrahmen notwendig ist.

Diese Aufgabe wird durch die Merkmale des Anspruches 37 gelöst.

Dadurch, daß bei der Kuchenform ein Bügel vorgesehen ist, der mit seinen Schenkeln an die Außenflächen des Backrahmens greift, kann der Backrahmen beispielsweise in seiner Mitte zusammengedrückt und diese Form mittels des Bügels fixiert werden.

Auf diese Art und Weise kann mit Hilfe des Bügels die Form des Backrahmens variiert werden.

Weist der Backrahmen in seiner Grundform Einbuchtungen auf, ist der Backrahmen also beispielsweise sternförmig oder rosettenförmig ausgebildet, so greift der Bügel in diese Einbuchtungen, und der Backrahmen behält seine durch den Bügel fixierte Form.

Ist ein Backrahmen vorgesehen, der keine Einbuchtungen aufweist, beispielsweise ein runder oder ein rechteckiger Backrahmen, so weist der Backrahmen vorteilhaft Halterungen auf, in die die Schenkel des Bügels greifen.

Zur Veränderung der Form des Backrahmens können auch mehrere Bügel, beispielsweise zwei Bügel vorgesehen sein, die gleichzeitig an dem Backrahmen angeordnet werden.

Der Backrahmen besteht vorteilhaft aus Federbandstahl. Dieses hat den Vorteil, daß der Backrahmen nach Entfernen des Bügels oder der Bügel wieder in seine ursprüngliche Form zurückkehrt und anschließend entweder in dieser Form oder in anderer, veränderter Form wiederverwendet werden kann, je nach Anordnung oder Ausbildung des Bügels.

Vorteilhaft ist der Bügel an seiner Grundseite längenverstellbar. Hierdurch ist es möglich, mit nur einem Bügel und einem Backrahmen eine Vielzahl von Formveränderungen des Backrahmens vorzunehmen.

Die Schenkel des Bügels weisen vorteilhaft eine Länge auf, die wenigstens der Höhe des Backrahmens entspricht.

Weitere Einzelheiten der Erfindung können den Unteransprüchen entnommen werden.

Auf der Zeichnung sind Ausführungsbeispiele der Erfindung dargestellt, und zwar zeigen:
- Fig. 1: ein erstes Ausführungsbeispiel;
- Fig. 2: einen Schnitt nach der Linie II-II der Fig. 1;
- Fig. 3: ein weiteres Ausführungsbeispiel;
- Fig. 4: ein geändertes Ausführungsbeispiel gemäß Fig. 3;
- Fig. 5: eine Ansicht in Richtung des Pfeiles D der Fig. 3;
- Fig. 6: einen Schnitt nach der Linie VI-VI der Fig. 5;
- Fig. 7: ein geändertes Ausführungsbeispiel;
- Fig. 8: ein geändertes Ausführungsbeispiel in perspektivischer Darstellung;
- Fig. 9: ein weiteres Ausführungsbeispiel;
- Fig. 10: einen Schnitt nach der Linie X-X der Fig. 9;
- Fig. 11: ein weiteres Ausführungsbeispiel;
- Fig. 12: eine Draufsicht auf einen rechteckigen Backrahmen;
- Fig. 13: eine Draufsicht auf einen vergrößerten rechteckigen Backrahmen;
- Fig. 14: eine Seitenansicht des Backrahmens aus Fig. 12;
- Fig. 15: einen Schnitt nach der Linie XV-XV der Fig. 14;
- Fig. 16: eine Draufsicht auf einen runden Backrahmen;
- Fig. 17: einen Längsschnitt durch einen Backrahmen mit einem Bügel;
- Fig. 18: eine Draufsicht auf einen Backrahmen in Grundform;
- Fig. 19: eine Draufsicht auf einen Backrahmen in geänderter Form;
- Fig. 20: eine Draufsicht auf ein geändertes Ausführungsbeispiel;
- Fig. 21: eine Draufsicht auf ein geändertes Ausführungsbeispiel;
- Fig. 22: eine Draufsicht auf ein geändertes Ausführungsbeispiel;
- Fig. 23: eine Draufsicht auf ein geändertes Ausführungsbeispiel;
- Fig. 24: eine Draufsicht auf einen geänderten Backrahmen in Grundform;
- Fig. 25: eine Draufsicht auf ein geändertes Ausführungsbeispiel;
- Fig. 26: eine Draufsicht auf ein weiteres Ausführungsbeispiel;
- Fig. 27: einen Längsschnitt durch einen verstellbaren Bügel.

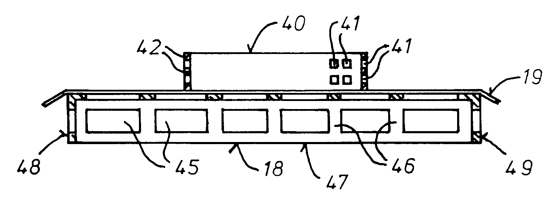

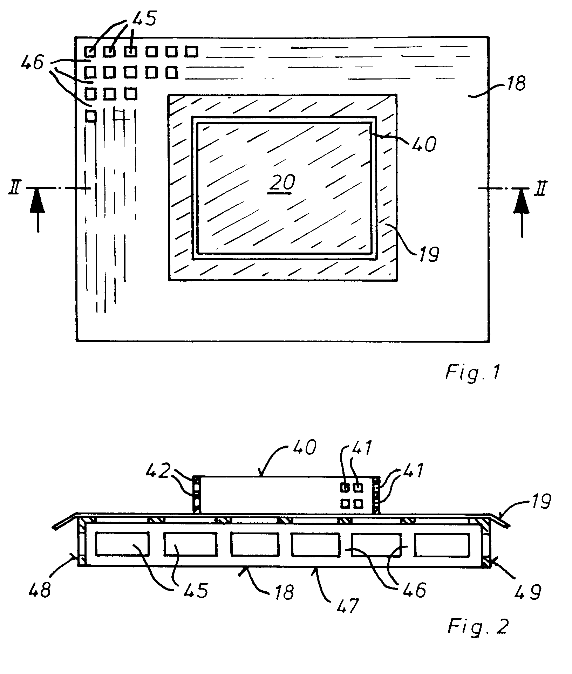

Fig. 1 zeigt einen Backofenrost (18) mit Durchbrüchen (45) und Stegen (46). Zwecks Verarbeitung eines dünnflüssigeren Teiges ist eine Backfolie (19) auf den Backofenrost (18) gelegt. Auf der Backfolie (19) ist ein rechteckiger Backrahmen (40) angeordnet. In den Innenraum (20), der von der Backfolie (19) und dem Backrahmen (40) begrenzt wird, wird Kuchenteig eingefüllt. Der Backrahmen (40) weist ebenfalls Durchbrüche (41) sowie Stege (42) gemäß Fig. 2 auf.

Durch die Durchbrüche (41, 45) in dem Backrahmen (40) und dem Backofenrost (18) wird die Wärmeübertragung auf den Kuchenteig erheblich verbessert. Hierdurch wird zum einen eine gleichmäßige Wärmeübertragung erreicht, zum anderen wird die Backzeit erheblich verkürzt.

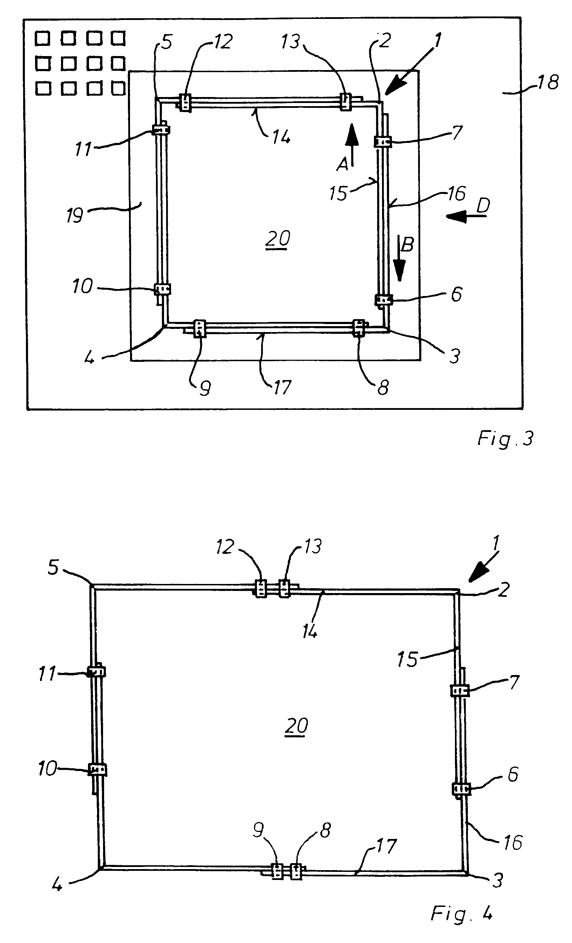

Fig. 3 zeigt einen rechteckigen Backrahmen (1), der in seiner Größe verstellbar ist. Der Backrahmen (1) besteht aus Segmenten (2, 3, 4, 5). Die Segmente (2, 3) weisen rechtwinklig zueinander stehende Seitenflächen (14, 15; 16, 17) auf.

Die Seitenflächen (15, 16) der Segmente (2, 3) überlappen sich und werden mit Klammern (6, 7) zusammengehalten.

Die Klammern (6, 7) weisen eine derartige Spannung auf, daß die Seitenflächen (15, 16) gegeneinander verschoben werden können und nach dem Verschieben in der eingestellten Position verbleiben.

Ebenso weisen die Segmente (4, 5) senkrecht zueinander stehende Seitenflächen auf, die sich mit den Seitenflächen der Nachbarsegmente überlappen und durch Klammern (8 bis 13) verbunden sind.

Der Backrahmen (1) wird auf den Backofenrost (18) aufgesetzt. Für die Verarbeitung von dünnflüssigerem Kuchenteig ist die Folie (19) zwischen Backrahmen (1) und Backofenrost (18) vorgesehen.

Um den Backrahmen (1) zu vergrößern, werden gemäß Fig. 4 die sich überlappenden Bereiche der Seitenflächen (15, 16) verkleinert, indem das Segment (2) in Richtung des Pfeiles A und das Segment (3) in Richtung des Pfeiles B geschoben wird. Um ein gleichmäßiges Rechteck zu erhalten, wird dieses Verfahren für die übrigen Seitenflächen (4, 5) ebenfalls durchgeführt.

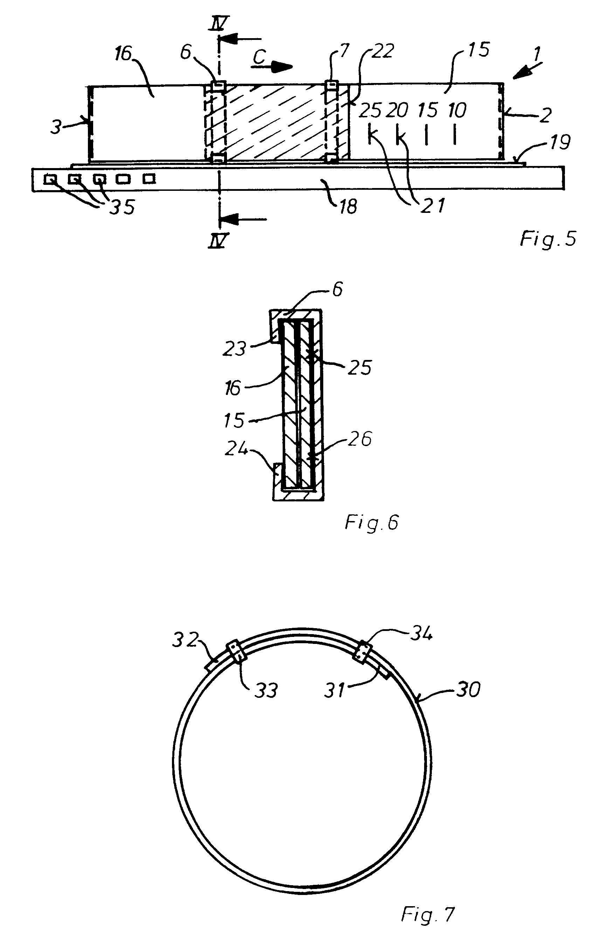

Fig. 5 zeigt den Backrahmen (1), der auf den Backofenrost (18) aufgesetzt ist. Zwischen dem Backofenrost (18) und dem Backrahmen (1) ist die Backfolie (19) vorgesehen.

Die Seitenflächen (15, 16) der Segmente (2, 3) überlappen sich im schraffiert gezeichneten Bereich und werden von den Klammern (6, 7) zusammengehalten.

Die Innenflächen der Seitenflächen (16, 17) liegen an der Außenfläche der Seitenfläche (15) an. Die Seitenfläche (15) weist eine Skaleneinteilung (21) auf ihrer Außenfläche auf, mit deren Hilfe die Seitenfläche (16) in die gewünschte Position relativ zur Seitenfläche (15) geschoben werden kann.

Die Skaleneinteilung (21) ist eine Strichskala, so daß die Seitenfläche (16) mit ihrer Kante (22) mit den Strichen der Skaleneinteilung (21) zur Deckung gebracht werden kann.

Die Skaleneinteilung (21) gibt vorteilhaft Zentimeterangaben für die Größe einer Seitenlänge des Backrahmens an.

Die Klammer (6) ist fest mit der Seitenfläche (15) verbunden. Die Klammer (7) greift lose verschiebbar um beide Seitenflächen (15, 16) herum.

Fig. 6 zeigt die Klammer (6), die mit ihren Enden (23, 24) um die Seitenflächen (15, 16) herumgreift. Die Klammer (6) ist an den Stellen (25, 26) mit der Seitenfläche (15) punktverschweißt.

Fig. 7 zeigt einen Backrahmen (30), dessen Endflächen (31, 32) sich überlappen. Die Endflächen (31, 32) werden mit Hilfe von Klammern (33, 34) zusammengehalten.

Wird der Überlappungsbereich der Endflächen (31, 32) des Backrahmens (30) vergrößert, so verringert sich der Durchmesser des Backrahmens (30).

Vorteilhaft ist auf der Seitenfläche (31) eine Skaleneinteilung vorgesehen mit Zentimeterangaben, um direkt den Durchmesser des Backrahmens (30) ablesen zu können.

Der Backofenrost ist nicht auf die Verwendung als Bodenblech für einen zu backenden Kuchen gebunden. Auf ihm läßt sich auch ein zu bratendes Fleischstück anordnen, das dann ebenfalls von allen Seiten her gleichmäßig erhitzt wird, auch dann, wenn unter dem erfindungsgemäßen Backofenrost das übliche Soßenauffangblech angeordnet wird.

Die Öffnungen im Blech sind relativ klein, so daß auf dem Blech auch Obst, Gemüse und dergleichen gedörrt werden können. Aus dem Backofen herausgenommen, dient der erfindungsgemäße Backofenrost auch als Auskühlgitter, beispielsweise für einen gebackenen Kuchen.

Der Vorteil des erfindungsgemäßen Verfahrens wird darin gesehen, daß zum einen durch den Backofenrost mit den Durchbrüchen und den Stegen die Hitze unmittelbar oder mittelbar durch eine Backfolie direkt auf den Kuchenteig übertragen werden kann.

Darüber hinaus können auf den Backofenrost beliebige Backrahmen aufgesetzt werden, so daß der Backofenrost als ein Bodenblech für die verschiedensten Formen von Kuchen dient. Bei Verwendung von größenverstellbaren Backrahmen wird auf diese Weise die Zahl der Hilfsmittel, die zum Backen der verschiedensten Kuchen verwendet werden, auf ein Minimum reduziert.

Der Backofenrost ist darüber hinaus vielseitig verwendbar, sei es als Bodenblech für die verschiedensten Kuchenformen, sei es als Bratrost oder als Auskühlgitter.

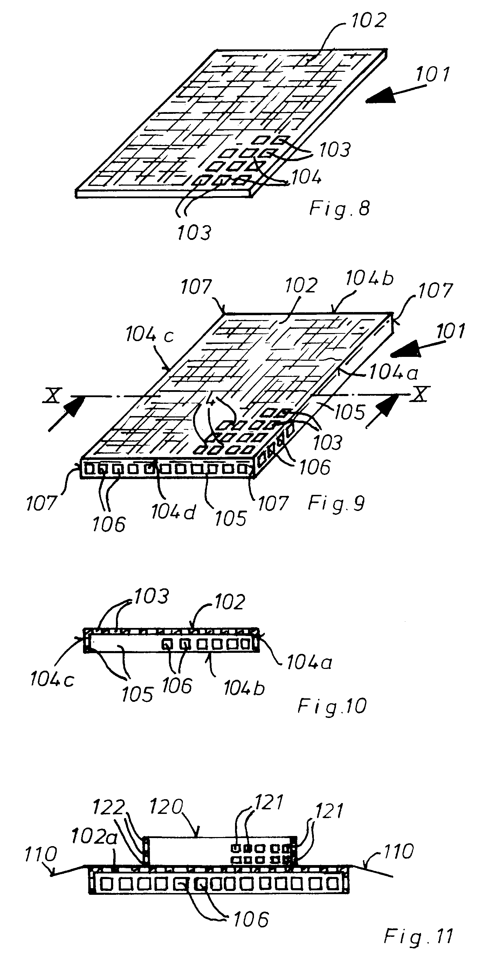

Gemäß Fig. 8 besteht der generell mit (101) bezeichnete Backofenrost aus einem Blech (102), welches eine Vielzahl von Durchbrüchen (103) aufweist. Gemäß Fig. 8 haben die Durchbrüche (103) eine rechteckige Querschnittsform, so daß zwischen den Durchbrüchen (103) schmale Stege (104) verbleiben, die so stark sind, daß das Blech (102) eine genügende Biegesteifigkeit aufweist.

In dieser Ausbildung kann das Blech (102) auf einem vorhandenen Gitterrost im Backofen angeordnet werden. Der auf dem Blech (102) angeordnete Teig wird dann von allen Seiten her praktisch gleichmäßig erhitzt.

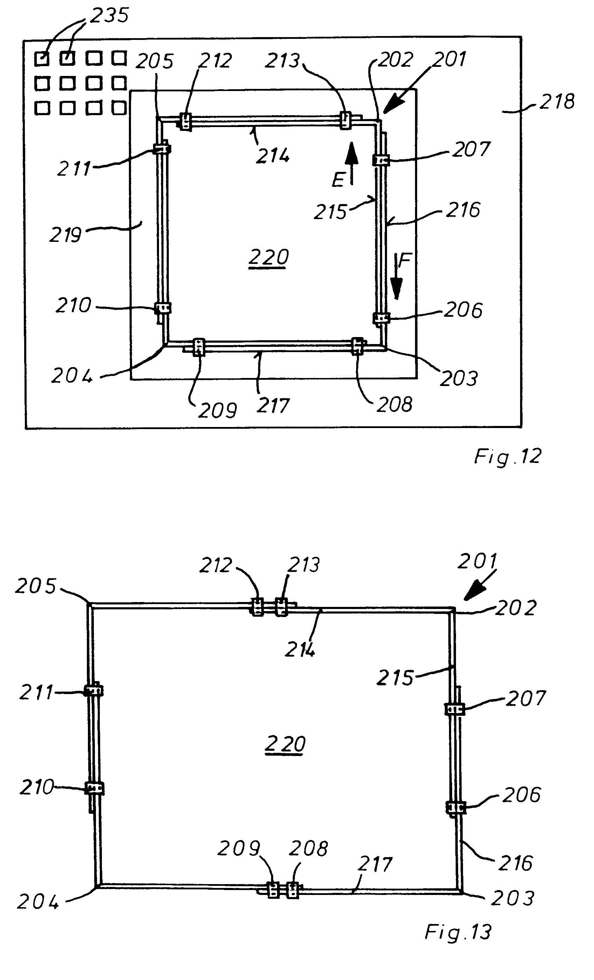

Gemäß den Fig. 9 und 10 sind die Seitenränder (105) des Bleches (102) in weiterer Ausgestaltung der Erfindung rechtwinklig nach unten abgewinkelt, und zwar längs der Steglinien (104a, 104b, 104c und 104d).

Die Ränder (105) weisen wiederum Durchbrüche (106) auf, vorteilhaft an sämtlichen ihrer vier Seiten, so daß die Heißluft beim Backen auch dann unter das Blech (102) strömen kann, wenn dieses beispielsweise auf einem Backofenblech aufliegt, das keine Öffnungen für einen Luftdurchtritt aufweist.

Gemäß Fig. 11 ist zwecks Verarbeitung eines dünneren Teiges ein Backpapier (110) auf das Blech (102) gelegt. Das Backpapier behindert den Wärmeübergang zum Boden des Backgutes nur unwesentlich. Ist der Teig so dünnflüssig, daß er seitlich davonlaufen kann, kann auf das Papier eine Randform (120) gesetzt werden, welche gemäß Fig. 11 als abnehmbarer Rand einer Tortenform ausgebildet ist. Die Randform (120) weist jedoch gegenüber einer üblichen Tortenrandform gemäß der Erfindung ebenfalls Durchbrüche (121) auf, zwischen denen wiederum Stege (122) vorgesehen sind. Bei dieser Ausbildung wird der Wärmeübergang auf den Kuchenteig von der Seite her ebenfalls nicht behindert. Das Blech (102) dient bei dieser Ausbildung als Bodenblech (102a) für eine "Kuchenform".

Die Randform braucht nicht kreisförmig ausgebildet zu sein. Sie kann jede beliebige andere Form aufweisen.

Der Vorteil der Erfindung wird darin gesehen, daß an das Backgut von allen Seiten her unmittelbar die Backofenwärme gelangen kann.

Der erfindungsgemäße Backofenrost ist nicht an die Verwendung als Bodenblech (102a) für einen zu backenden Kuchen gebunden. Auf ihm läßt sich auch ein zu bratendes Fleischstück anordnen, das dann ebenfalls von allen Seiten her gleichmäßig erhitzt wird, auch dann, wenn unter dem erfindungsgemäßen Backofenrost das übliche Soßenauffangblech angeordnet wird.

Die Öffnungen im Blech sind relativ klein, so daß auf dem Blech auch Obst, Gemüse und dergleichen zum Beispiel gedörrt werden kann. Aus dem Backofen herausgenommen, dient der erfindungsgemäße Backofenrost auch als Auskühlgitter, beispielsweise für einen gebackenen Kuchen.

Der Vorteil des erfindungsgemäßen Backofenrostes wird darin gesehen, daß einerseits an das aufgelegte Gut von allen Seiten her gleichmäßig die Backofenwärme gelangen kann und daß der erfindungsgemäße Backofenrost äußerst vielseitig verwendbar ist, sei es als Bodenblech für eine Kuchenform, als Bratrost oder als Auskühlgitter.

Fig. 12 zeigt einen rechteckigen Backrahmen (201), der aus Segmenten (202, 203, 204, 205) besteht.

Die Segmente (202, 203) weisen rechtwinklig zueinander stehende Seitenflächen (214, 215; 216, 217) auf.

Die Seitenflächen (215, 216) der Segmente (202, 203) überlappen sich und werden mit Klammern (206, 207) zusammengehalten.

Die Klammern (206, 207) weisen eine derartige Spannung auf, daß die Seitenflächen (215, 216) gegeneinander verschoben werden können und nach dem Verschieben in der eingestellten Position verbleiben.

Ebenso weisen die Segmente (204, 205) senkrecht zueinander stehende Seitenflächen auf, die sich mit den Seitenflächen der Nachbarsegmente überlappen und durch Klammern (208 bis 213) verbunden sind.

Der Backrahmen (201) wird auf einen Backofenrost (218) aufgesetzt. Der Backofenrost (218) weist eine Vielzahl von Öffnungen (235) auf, durch die die Heißluft unmittelbar an den Boden des Kuchenteiges gelangt. Damit Kuchenteig, der eine etwas flüssigere Konsistenz aufweist, nicht durch die Öffnungen (235) des Backofenrostes (218) hindurchfließt, ist eine Folie (219) zwischen Backrahmen (201) und Backofenrost (218) vorgesehen.

In den Innenraum (220) des Backrahmens (201) kann der Kuchenteig zum Backen eingefüllt werden.

Um den Backrahmen (201) zu vergrößern, werden gemäß Fig. 13 die sich überlappenden Bereiche der Seitenflächen (215, 216) verkleinert, indem das Segment (202) in Richtung des Pfeiles E und das Segment (203) in Richtung des Pfeiles F (Fig. 12) geschoben werden. Um ein gleichmäßiges Rechteck zu erhalten, wird dieses Verfahren auch für die übrigen Segmente (204, 205) durchgeführt.

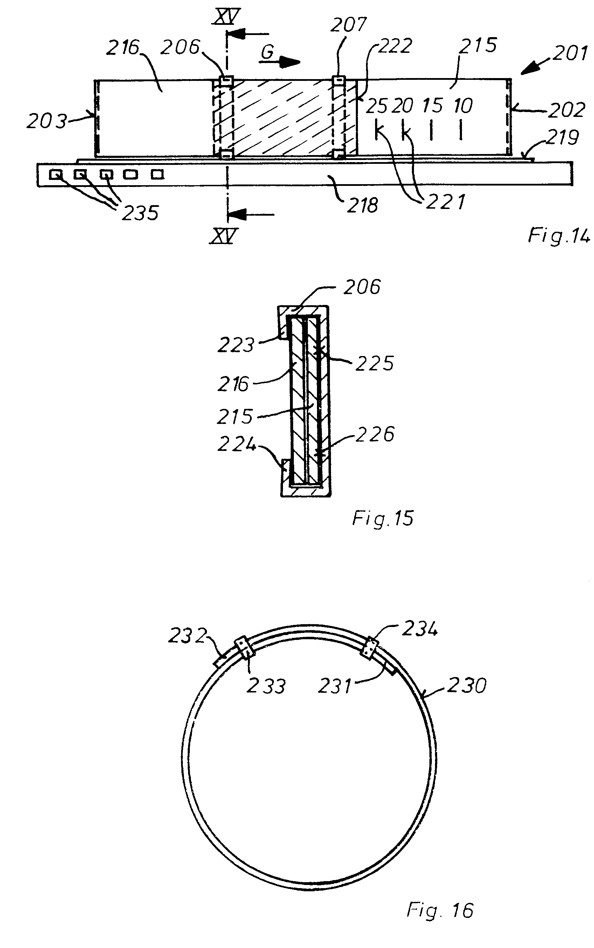

Fig. 14 zeigt eine Seitenansicht des Backrahmens (201), der auf dem Backofenrost (218) aufgesetzt ist. Zwischen dem Backofenrost (218) und dem Backrahmen (201) ist die Backfolie (219) vorgesehen.

Die Seitenflächen (215, 216) der Segmente (202, 203) überlappen sich im schraffiert gezeichneten Bereich und werden von den Klammern (206, 207) zusammengehalten.

Die Innenfläche der Seitenfläche (216) liegt an der Außenfläche der Seitenfläche (215). Die Seitenfläche (215) weist eine Skaleneinteilung (221) auf ihrer Außenfläche auf, mit deren Hilfe die Seitenfläche (216) in die gewünschte Position relativ zur Seitenfläche (215) geschoben werden kann.

Die Skaleneinteilung (221) ist eine Strichskala, so daß die Seitenfläche (216) mit ihrer Kante (222) mit den Strichen der Skaleneinteilung (221) zur Deckung gebracht werden kann.

Die Skaleneinteilung (221) gibt vorteilhaft Zentimeterangaben für die Größe einer Seitenlänge des Backrahmens (201) an.

Die Klammer (206) ist fest mit der Seitenfläche (215) verbunden. Die Klammer (207) greift lose verschiebbar um beide Seitenflächen (215, 216) herum.

Fig. 15 zeigt die Klammer (206), die mit ihren Enden (223, 224) um die Seitenflächen (215, 216) herumgreift. Die Klammer (206) ist an den Stellen (225, 226) mit der Seitenfläche (215) punktverschweißt.

Fig. 16 zeigt einen aus einem biegsamen Blechstreifen bestehenden Backrahmen (230), dessen Endflächen (231, 232) sich überlappen. Die Endflächen (231, 232) werden mit Hilfe von Klammern (233, 234) zusammengehalten.

Wird der Überlappungsbereich der Endflächen (231, 232) des Backrahmens (230) vergrößert, so verringert sich der Durchmesser des Backrahmens (230).

Vorteilhaft ist auf der Endfläche (231) wiederum eine Skaleneinteilung vorgesehen mit Zentimeterangaben, um direkt den Durchmesser des Backrahmens (230) ablesen zu können.

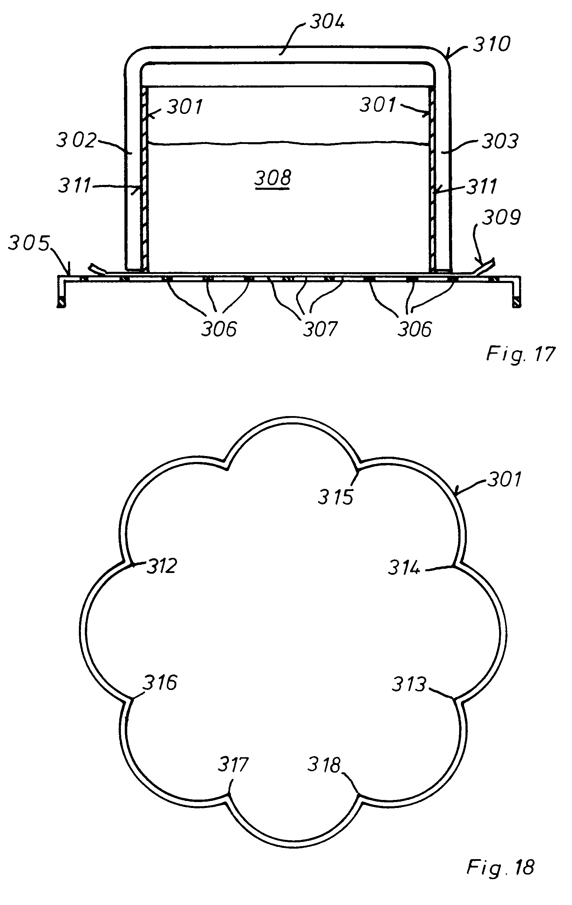

Fig. 17 zeigt einen Backrahmen (301), der auf einem Backofenrost (305) angeordnet ist. Zwischen Backrahmen (301) und Backofenrost (305) ist Kuchenteig (308) eingefüllt.

An Außenflächen (311) des Backrahmens (301) ist ein Bügel (310) angeordnet. Der Bügel (310) weist Schenkel (302, 303) und eine Grundseite (304) auf. Die Schenkel (302, 303) liegen an den Außenflächen (311) des Backrahmens (301) an.

Der Kuchenteig (308) wird zum Backen in die von dem Backrahmen (301) und dem Backofenrost (305) begrenzte Fläche eingefüllt. Damit die Wärme des Backofens gut auf den Teig (308) übertragen werden kann, weist der Backofenrost (305) Durchbrüche (307) und Stege (306) auf. Damit der Kuchenteig nicht durch die Durchbrüche (307) des Backofenrostes (305) nach unten wegfließen kann, ist eine Backfolie (309) vorgesehen.

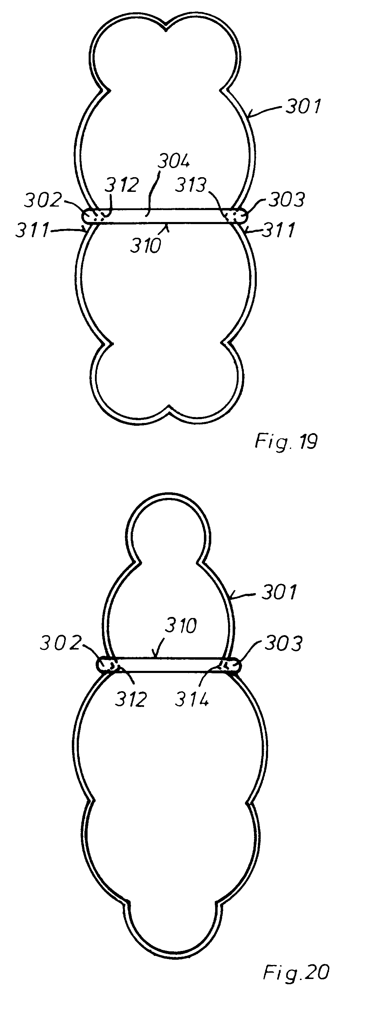

Fig. 18 zeigt einen rosettenförmigen Backrahmen, der eine im wesentlichen runde Grundform aufweist. Gemäß Fig. 19 ist der Backrahmen (301) mit Hilfe des Bügels (310) in seiner Form verändert, so daß eine im wesentlichen rechteckige Grundform vorhanden ist. Die Schenkel (302, 303) des Bügels (310) liegen an den Außenflächen (311) des Backrahmens (301) an und halten so den Backrahmen in seiner veränderten Form.

Die Grundseite (304) des Bügels (310) liegt dabei oberhalb des Backrahmens (301) und kann gleichzeitig als Griff zum Tragen des Backrahmens (301) verwendet werden. Der Bügel (310) liegt hierbei mit Reibungsschluß an dem Backrahmen (301) an.

Gemäß Fig. 19 ist der Bügel (310) in der Mitte des Backrahmens angeordnet und greift in symmetrisch gegenüberliegend angeordnete Einbuchtungen (312, 313) des Backrahmens (301).

Gemäß Fig. 20 greifen die Schenkel (302, 303) des Bügels (310) in Einbuchtungen (312, 314) des Backrahmens, so daß der Backrahmen (301) eine im wesentlichen konische Grundform aufweist.

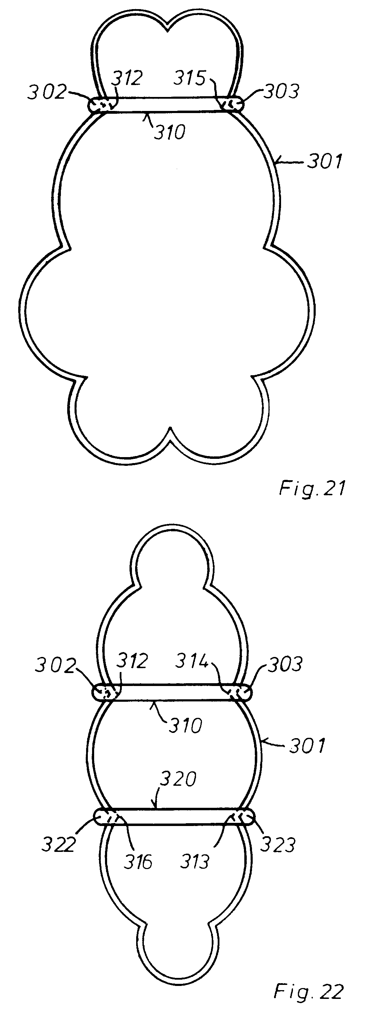

Gemäß Fig. 21 weist der Backrahmen (301) eine wiederum geänderte Form auf. Der Bügel (310) greift mit seinen Schenkeln (302, 303) in Einbuchtungen (312, 315) des Backrahmens (301). Da zwischen den Einbuchtungen (312, 315) nur noch eine weitere Einbuchtung angeordnet ist, ist der obere Teil der Backform enger und der untere Teil der Backform weiter ausgebildet.

Gemäß Fig. 22 ist die Form des Backrahmens (301) durch zwei Bügel (310, 320) mit Schenkeln (302, 303; 322, 323) verändert. Der Bügel (310) greift mit seinen Schenkeln (302, 303) in Einbuchtungen (312, 314). Der Bügel (320) greift mit seinen Schenkeln (322, 323) in Einbuchtungen (316, 313). Hierdurch wird eine längliche Form des rosettenförmigen Backrahmens erreicht. Beispielsweise kann diese Form als Stollenform verwendet werden.

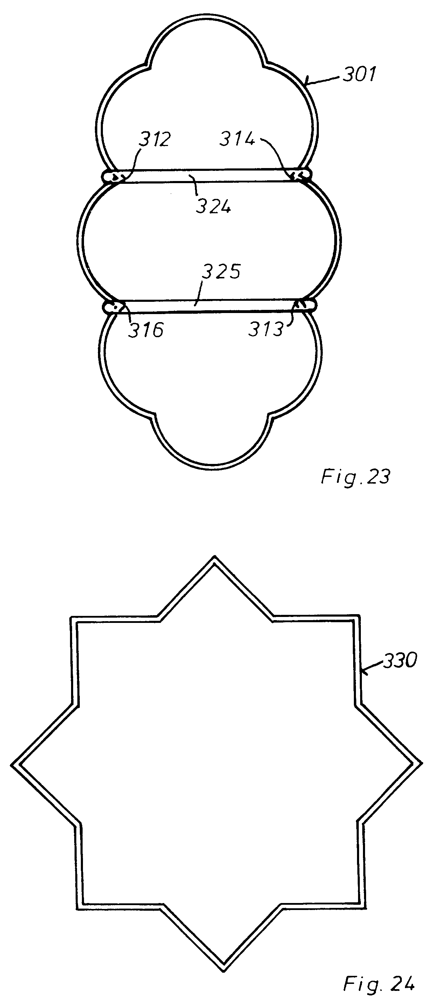

Fig. 23 zeigt den Backrahmen (301), in dessen Einbuchtungen (312, 314; 313, 316) Bügel (324, 325) greifen. Die Bügel (324, 325) weisen gegenüber den Bügeln (310, 320) eine längere Grundseite auf, so daß der Backrahmen (301) eine breitere Form als in Fig. 22 dargestellt aufweist.

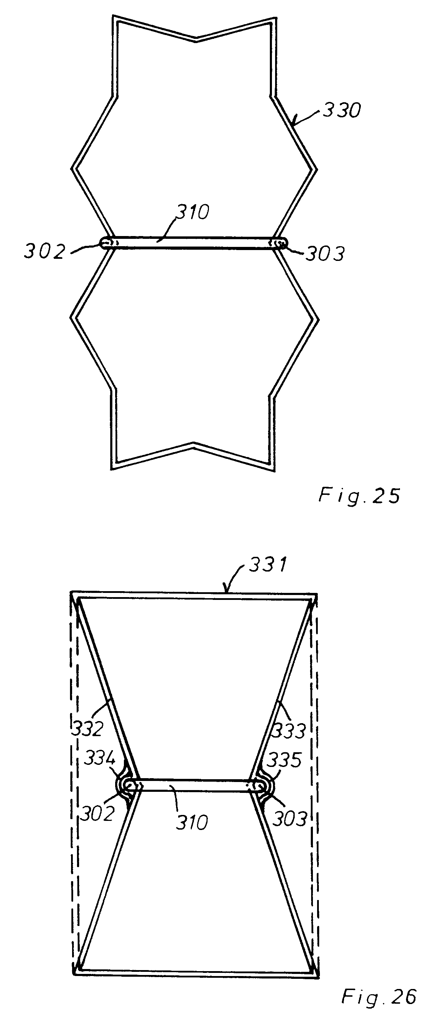

Fig. 24 zeigt einen sternförmigen Backrahmen (330), der eine im wesentlichen runde Grundform aufweist. Gemäß Fig. 25 ist der Backrahmen (330) durch den Bügel (310) mit seinen Schenkeln (302, 303) in seiner Form derart verändert, daß eine im wesentlichen rechteckige Grundform vorliegt. Diese längliche Form des Backrahmens (330) ist beispielsweise als Stollenform verwendbar.

Fig. 26 zeigt einen Backrahmen (331), der durch den Bügel (310) eine gegenüber der ursprünglich rechteckigen Form, die gestrichelt dargestellt ist, veränderte Form aufweist.

Der Bügel (310) greift mit seinen Schenkeln (302, 303) an Seitenflächen (332, 333) des Rahmens (331). Damit der Bügel (310) in der Mitte der Seitenflächen (332, 333) fixiert wird und nicht wegrutscht, weist der Backrahmen (331) Halter (334, 335) für die Schenkel (302, 303) des Bügels (310) auf.

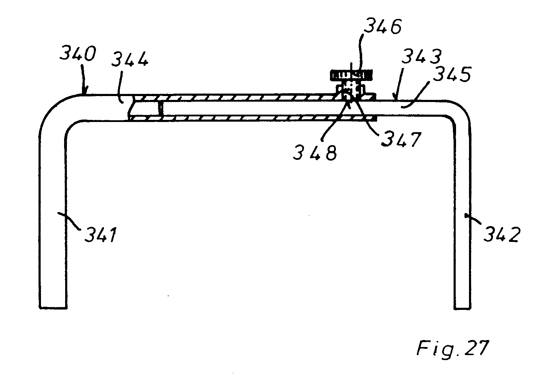

Fig. 27 zeigt einen Bügel (340) mit Schenkeln (341, 342) und einer Grundseite (343). Die Grundseite (343) ist zweiteilig ausgebildet. Der Teil (344) ist hohl ausgebildet, so daß der Teil (345) in dem Teil (344) angeordnet werden kann. Der Teil (345) der Grundseite (343) ist in dem Teil (344) verschiebbar angeordnet, so daß die Grundseite (343) des Bügels (340) in der Länge variierbar ist. Zum Feststellen des Bügels (344) mit einer bestimmten Länge der Grundseite (343) ist eine Stellschraube (346) vorgesehen, die durch eine Gewindebohrung (347) greift und mit ihrem Ende (348) auf dem Teil (345) der Grundseite (343) aufliegt. Wird die Stellschraube (346) in die Gewindebohrung hineingedreht, so drückt sie auf den Teil (345) der Grundseite (343) und fixiert diesen in dem Teil (344) der Grundseite (343).

### Bezugszahlen

- 1: Backrahmen
- 2 bis 5: Segmente des Backrahmens
- 6 bis 13: Klammern
- 14 bis 17: Seitenflächen
- 18: Backofenrost
- 19: Folie
- 20: Innenraum des Backrahmens
- 21: Skaleneinteilung
- 22: Endkante der Seitenfläche (16)
- 23: Ende der Klammer (6)
- 24: Ende der Klammer (6)
- 25: Punktverschweißung
- 26: Punktverschweißung
- 30: Backrahmen
- 31: Endfläche des Backrahmens
- 32: Endfläche des Backrahmens
- 33, 34: Klammern
- 40: Backrahmen
- 41: Durchbrüche
- 42: Stege
- 45: Durchbrüche
- 46: Stege
- 47: Rand des Backofenrostes
- 48, 49: Ecken des Seitenrandes
- 101: Backofenrost
- 102: Blech
- 102a: Bodenblech
- 103: Durchbrüche
- 104: Stege
- 104a, 104b,: Steglinien
- 104c, 104d: Steglinien
- 105: Seitenrand
- 106: Durchbrüche
- 107: Kanten
- 110: Backpapier
- 120: Randform
- 121: Durchbrüche
- 122: Stege
- 201: Backrahmen
- 202: Segment des Backrahmens
- 203: Segment des Backrahmens
- 204: Segment des Backrahmens
- 205: Segment des Backrahmens
- 206: Klammer
- 207: Klammer
- 208: Klammer
- 209: Klammer
- 210: Klammer
- 211: Klammer
- 212: Klammer
- 213: Klammer
- 214: Seitenfläche
- 215: Seitenfläche
- 216: Seitenfläche
- 217: Seitenfläche
- 218: Backofenrost
- 219: Folie
- 220: Innenraum des Backrahmens
- 221: Skaleneinteilung
- 222: Endkante der Seitenfläche 216
- 223: Ende der Klammer 206
- 224: Ende der Klammer 206
- 225: Punktverschweißung
- 226: Punktverschweißung
- 230: Backrahmen
- 231: Endfläche des Backrahmens
- 232: Endfläche des Backrahmens
- 233: Klammer
- 234: Klammer
- 235: Durchbrüche
- 301: Backrahmen
- 302: Schenkel des Bügels (310)
- 303: Schenkel des Bügels (310)
- 304: Grundseite des Bügels (310)
- 305: Backofenrost
- 306: Stege
- 307: Durchbrüche
- 308: Teig
- 309: Folie
- 310: Bügel
- 311: Außenflächen des Backrahmens
- 312 bis 318: Einbuchtungen des Backrahmens (301)
- 320: Bügel
- 322: Schenkel des Bügels (320)
- 323: Schenkel des Bügels (320)
- 324: Bügel
- 325: Bügel
- 330: Backrahmen
- 331: Backrahmen
- 332, 333: Seitenflächen des Backrahmens (331)
- 334, 335: Halter
- 340: Bügel
- 341: Schenkel
- 342: Schenkel
- 343: Grundseite
- 344: Teil der Grundseite
- 345: Teil der Grundseite
- 346: Stellschraube
- 347: Gewindebohrung
- 348: Ende der Schraube
- A, B, C, D: Pfeile
- E, F, G: Pfeile

## Patentansprüche

1. Verfahren zum Backen von Kuchen, bei dem zwischen einen Backofenrost und einen Backrahmen eine Backfolie gelegt wird, und bei dem Kuchenteig in den vom Backrahmen und Backofenrost und Backfolie begrenzten Raum eingefüllt wird, und bei dem der in diesen Raum eingefüllte Teig gebacken wird ,
**dadurch gekennzeichnet**, daß ein gitterförmiger Backofenrost (18) verwendet wird, der Durchbrüche (45) und Stege (46) aufweist, und bei dem die Ränder des Bleches wenigstens teilweise nach unten zu wenigstens einem Seitenrand (47) abgewinkelt sind, und daß der wenigstens eine Seitenrand (47) ebenfalls Durchbrüche (45) und Stege (46) aufweist.

2. Verfahren zum Backen von Kuchen nach Anspruch 1, dadurch gekennzeichnet, daß ein Backofenrost verwendet wird, bei dem der wenigstens eine Seitenrand (47) ohne Unterbrechung um den Backofenrost (18) herumgeführt ist.

3. Verfahren zum Backen von Kuchen nach Anspruch 1, dadurch gekennzeichnet, daß ein Backofenrost (18) verwendet wird, bei dem die Durchbrüche (45) eine kreisförmige Form aufweisen oder die Form eines regelmäßigen Sechseckes.

4. Verfahren zum Backen von Kuchen nach Anspruch 1, dadurch gekennzeichnet, daß ein Backofenrost verwendet wird, bei dem die Durchbrüche (45) eng beieinander liegen und zwischen ihnen schmale Stege (46) vorgesehen sind.

5. Verfahren zum Backen von Kuchen nach Anspruch 1, dadurch gekennzeichnet, daß der wenigstens eine Seitenrand (47) längs einer Steglinie des Backofenrostes (18) abgeknickt ist.

6. Verfahren zum Backen von Kuchen nach Anspruch 4, dadurch gekennzeichnet, daß ein Backofenrost (18) verwendet wird, bei dem die Kanten des wenigstens einen Seitenrandes (47) an den Ecken (48, 49) des Bleches (18) miteinander verschweißt sind.

7. Verfahren zum Backen von Kuchen nach Anspruch 1, dadurch gekennzeichnet, daß ein gitterförmiger Backrahmen (1, 30) zum Aufsetzen auf den Backofenrost (18) verwendet wird, der Durchbrüche (41) und Stege (42) aufweist.

8. Verfahren zum Backen von Kuchen nach Anspruch 1, dadurch gekennzeichnet, daß ein Backofenrost (18) verwendet wird, der eine rechteckige oder quadratische Form oder eine runde Form aufweist.

9. Verfahren zum Backen von Kuchen nach Anspruch 1, dadurch gekennzeichnet, daß ein Backrahmen (1, 30) zum Aufsetzen auf den Backofenrost (18) verwendet wird, der kreisförmig oder rechteckig ausgebildet ist.

10. Verfahren zum Backen von Kuchen nach Anspruch 1, dadurch gekennzeichnet, daß ein Backrahmen (1, 30) verwendet wird, der größenverstellbar ist.

11. Verfahren zum Backen von Kuchen nach Anspruch 1, dadurch gekennzeichnet, daß ein Backrahmen (1, 30) verwendet wird, der wenigstens eine Skaleneinteilung (21) aufweist.

12. Verfahren zum Backen von Kuchen nach Anspruch 11, dadurch gekennzeichnet, daß ein Backrahmen (1, 30) verwendet wird, der eine Skaleneinteilung auf seiner Außenfläche aufweist.

13. Verfahren zum Backen von Kuchen nach Anspruch 12, dadurch gekennzeichnet, daß ein Backrahmen (1, 30) verwendet wird, bei dem zur Größenverstellung sich überlappende Seitenflächen (1 bis 17; 31, 32) des Backrahmens (1, 30) vorgesehen sind.

14. Verfahren zum Backen von Kuchen nach Anspruch 12, dadurch gekennzeichnet, daß ein Backrahmen verwendet wird, der aus vier Segmenten (2 bis 5) besteht.

15. Verfahren zum Backen von Kuchen nach Anspruch 14, dadurch gekennzeichnet, daß der verwendete Backrahmen (1, 30) Segmente (2 bis 5) aufweist, die aus jeweils zwei im rechten Winkel zueinander stehenden Seitenflächen bestehen.

16. Verfahren zum Backen von Kuchen nach Anspruch 14, dadurch gekennzeichnet, daß sich je zwei Seitenflächen (15, 16) der Segmente (2, 3) überlappen, und daß die Segmente (2 bis 5) ein Rechteck bilden.

17. Verfahren zum Backen von Kuchen nach Anspruch 14, dadurch gekennzeichnet, daß jeweils zwei Klammern (6, 7; 33, 34) zur Verbindung der sich überlappenden Seitenflächen (15, 16; 31, 32) vorgesehen sind.

18. Verfahren zum Backen von Kuchen nach Anspruch 14, dadurch gekennzeichnet, daß eine Klammer (6) fest mit einer der beiden sich überlappenden Seitenflächen (15, 16) verbunden ist.

19. Verfahren zum Backen von Kuchen nach Anspruch 14, dadurch gekennzeichnet, daß die Klammer (6) am Ende der Seitenfläche (16) angeordnet ist.

20. Verfahren zum Backen von Kuchen nach Anspruch 1, gekennzeichnet durch Verwendung eines Backrahmens (1, 30) und/oder Backofenrostes (18), der aus Edelstahl, normalem Stahl oder aus hitzebeständigem Kunststoff besteht.

21. Verfahren zum Backen von Kuchen nach Anspruch 1, gekennzeichnet durch Verwendung eines Backrahmens (1, 30) und/oder Backofenrostes (18), der eine Antihaftmittelbeschichtung trägt.

22. Verfahren zum Backen von Kuchen nach Anspruch 1, dadurch gekennzeichnet, daß ein Backrahmen (1, 30) und/oder Backofenrost (18) verwendet wird, der eine Teflonbeschichtung trägt (Teflon gleich Handelsname).

23. Verfahren zum Backen von Kuchen nach Anspruch 1, dadurch gekennzeichnet, daß die Fläche des Backofenrostes (18) größer ist als die Fläche des Backrahmens (1, 30) bei größtmöglicher Einstellung.

24. Backofenrost zur Durchführung des Verfahrens nach Anspruch 1, dadurch gekennzeichnet, daß der Backofenrost (101) aus einem starken, ebenen Blech (102) besteht, das eine Vielzahl von Durchbrüchen (103) aufweist, daß die Ränder des Bleches (102) wenigstens teilweise nach unten zu wenigstens einem Seitenrand (105) abgewinkelt sind, und daß der wenigstens eine Seitenrand (105) ebenfalls Durchbrüche (106) aufweist, und daß die Durchbrüche (103, 106) eng beieinander liegen und zwischen ihnen schmale Stege (104) vorgesehen sind.

25. Backofenrost nach Anspruch 24, dadurch gekennzeichnet, daß der wenigstens eine Seitenrand (105) ohne Unterbrechung um das Blech (102) herumgeführt ist.

26. Backofenrost nach Anspruch 24, dadurch gekennzeichnet, daß die Durchbrüche (103, 106) eine kreisförmige Form aufweisen oder die Form eines regelmäßigen Sechseckes.

27. Backofenrost nach Anspruch 24, dadurch gekennzeichnet, daß der wenigstens eine Seitenrand (105) längs einer Steglinie (104a, 104b, 104c, 104d) des Bleches (102) abgeknickt ist.

28. Backofenrost nach Anspruch 24, dadurch gekennzeichnet, daß die Kanten (107) des wenigstens einen Seitenrandes (105) an den Ecken des Bleches (102) miteinander verschweißt sind.

29. Backofenrost nach Anspruch 24, dadurch gekennzeichnet, daß das Blech (102) aus Edelstahl, normalem Stahl oder aus hitzebeständigem Kunststoff besteht.

30. Backofenrost nach Anspruch 29, dadurch gekennzeichnet, daß der Backofenrost (101) eine Antihaftmittelbeschichtung trägt.

31. Backofenrost nach Anspruch 30, dadurch gekennzeichnet, daß der Backofenrost (101) eine Teflonbeschichtung trägt (Teflon gleich Handelsname).

32. Backofenrost nach Anspruch 24, dadurch gekennzeichnet, daß der Backofenrost (101) das Bodenblech (102a) für eine aufsetzbare Randform (120) bildet.

33. Backofenrost nach Anspruch 32, dadurch gekennzeichnet, daß die Randform (120) nach Art eines Seitenringes einer Kuchenform (Tortenform) ausgebildet ist.

34. Backofenrost nach Anspruch 32, dadurch gekennzeichnet, daß die Randform (120) Durchbrüche (121) aufweist.

35. Backofenrost nach Anspruch 24, dadurch gekennzeichnet, daß das Blech (102) eine rechteckige oder quadratische Form aufweist.

36. Backofenrost nach Anspruch 24, dadurch gekennzeichnet, daß das Blech (102) kreisförmig ausgebildet ist.

37. Backrahmen zum Backen von Kuchen, der auf einen Backofenrost aufsetzbar ist zur Durchführung eines Backverfahrens, bei dem der Backrahmen lose auf einen Backofenrost aufgesetzt wird, und bei dem der Kuchenteig in den vom Backrahmen und Backofenrost begrenzten Raum eingefüllt wird, und bei dem der in diesen Raum eingefüllte Teig gebacken wird, dadurch gekennzeichnet, daß zur Veränderung der Form des Backrahmens (301, 330, 331) wenigstens ein Bügel (310, 320, 324, 325) vorgesehen ist.

38. Backrahmen nach Anspruch 37, dadurch gekennzeichnet, daß der Bügel (310) des Backrahmens (301, 330, 331) zwei Schenkel (302, 303) und eine Grundseite (304) aufweist.

39. Backrahmen nach Anspruch 37, dadurch gekennzeichnet, daß die Schenkel (302, 303) des Bügels (310) an Außenflächen (311) des Backrahmens (301) anliegende Schenkel (302, 303) sind.

40. Backrahmen nach Anspruch 37, dadurch gekennzeichnet, daß der Backrahmen (301, 330, 331) aus Federbandstahl besteht.

41. Backrahmen nach Anspruch 37, dadurch gekennzeichnet, daß ein Bügelsatz mit unterschiedlichen Grundseitenlängen vorgesehen ist.

42. Backrahmen nach Anspruch 37, dadurch gekennzeichnet, daß die Grundseite (304) des Bügels (310) in ihrer Länge verstellbar ist.

43. Backrahmen nach Anspruch 37, dadurch gekennzeichnet, daß die Schenkel (302, 303) des Bügels (310) eine Länge aufweisen, die wenigstens der Höhe des Backrahmens (301) entspricht.

44. Backrahmen nach Anspruch 37, dadurch gekennzeichnet, daß der Backrahmen eine runde, rechteckige, sternförmige, rosettenförmige oder ähnliche Form aufweist.

45. Backrahmen nach Anspruch 37, dadurch gekennzeichnet, daß der Backrahmen (331) Halter (334, 335) für die Aufnahme der Schenkel (302, 303) des wenigstens einen Bügels (310) aufweist.

46. Backrahmen nach Anspruch 37, dadurch gekennzeichnet, daß der Backrahmen (301, 330, 331) in seiner Größe verstellbar ist.

47. Backrahmen zum Aufsetzen auf einen Backofenrost zum Backen von Kuchen zur Durchführung des Verfahrens nach Anspruch 1, dadurch gekennzeichnet, daß der Backrahmen (201, 230) in seiner Größe verstellbar ist und wenigstens eine Skaleneinteilung (221) aufweist.

48. Backrahmen nach Anspruch 47, dadurch gekennzeichnet, daß der Backrahmen (201) eine rechteckige Form aufweist mit längenverstellbaren Seiten.

49. Backrahmen nach Anspruch 47, dadurch gekennzeichnet, daß der Backrahmen (230) eine runde Form aufweist.

50. Backrahmen nach Anspruch 47, dadurch gekennzeichnet, daß die Skaleneinteilung (221) auf einer Außenfläche des Backrahmens (201, 230) angeordnet ist.

51. Backrahmen nach Anspruch 47, dadurch gekennzeichnet, daß zur Größenverstellung sich überlappende Seitenflächen (214 bis 217; 231, 232) des Backrahmens (201, 230) vorgesehen sind.

52. Backrahmen mit rechteckiger Form nach Anspruch 48, dadurch gekennzeichnet, daß der Backrahmen (201) aus vier Segmenten (202 bis 205) besteht.

53. Backrahmen nach Anspruch 52, dadurch gekennzeichnet, daß die Segmente (202 bis 205) aus jeweils zwei im rechten Winkel zueinander stehenden Seitenflächen bestehen.

54. Backrahmen nach Anspruch 52 oder 53, dadurch gekennzeichnet, daß sich je zwei Seitenflächen (215, 216) der Segmente (202, 203) überlappen, und daß die Segmente (202 bis 205) ein Rechteck bilden.

55. Backrahmen nach Anspruch 51, dadurch gekennzeichnet, daß jeweils zwei Klammern (206, 207; 233, 234) zur Verbindung der sich überlappenden Seitenflächen (215, 216; 231, 232) vorgesehen sind.

56. Backrahmen nach Anspruch 55, dadurch gekennzeichnet, daß eine Klammer (206) fest mit einer der beiden sich überlappenden Seitenflächen (215, 216) verbunden ist.

57. Backrahmen nach Anspruch 55, dadurch gekennzeichnet, daß die Klammer (206) am Ende der Seitenfläche (216) angeordnet ist.

58. Backrahmen nach Anspruch 47, dadurch gekennzeichnet, daß der Backrahmen (201, 230) aus Edelstahl, normalem Stahl, Federstahl und/oder rostfreiem Stahl oder hitzebeständigem Kunststoff besteht.

59. Backrahmen nach Anspruch 47, dadurch gekennzeichnet, daß der Backrahmen (201, 230) eine Antihaftmittelbeschichtung trägt.

60. Backrahmen nach Anspruch 47, dadurch gekennzeichnet, daß der Backrahmen (201, 230) eine Teflonbeschichtung trägt (Teflon gleich Handelsname).

61. Backrahmen nach Anspruch 47, dadurch gekennzeichnet, daß die Fläche des Backofenrostes (218) größer ist als die Fläche des Backrahmens (201, 230) bei größtmöglicher Einstellung.

## Claims

1. Cake baking process, in which a baking foil is laid between an oven shelf and a baking frame, and in which cake mixture is filled Into the space limited by the baking frame and oven shelf and baking foil, and in which the cake mixture filled into this space is baked,
**characterized in that** a grid-type oven shelf (18) is used, which has perforations (45) and tie bars (46), and in which the edges of the metal sheet are angled at least partially downwards to at least one lateral edge (47) and that the at least one lateral edge (47) also has perforations (45) and tie bars (46).

2. Cake baking process according to claim 1, characterized in that an oven shelf is used, in which the at least one lateral edge (47) is guided without interruption round the oven shelf (18).

3. Cake baking process according to claim 1, characterized in that an oven shelf (18) is used, in which the perforations (45) have a circular shape or the form of a regular hexagon.

4. Cake baking process according to claim 1, characterized in that an oven shelf is used, in which the perforations (45) are close together and narrow tie bars (46) are provided between them.

5. Cake baking process according to claim 1, characterized in that the at least one lateral edge (47) is folded down along a tie bar line of the oven shelf (18).

6. Cake baking process according to claim 4, characterized in that an oven shelf (18) is used, in which the edges of the at least one lateral edge (47) are welded together at the corners (48, 49) of the metal sheet (18).

7. Cake baking process according to claim 1, characterized in that a grid-type baking frame (1,30) which has perforations (41) and tie bars (42) is used for placing on the oven shelf (18).

8. Cake baking process according to claim 1, characterized in that an oven shelf (18) is used, which has a rectangular or square shape or a round shape.

9. Cake baking process according to claim 1, characterized in that a baking frame (1,30) which is of circular or rectangular shape is used for placing on the oven shelf (18).

10. Cake baking process according to claim 1, characterized in that a baking frame (1,30) is used, which is adjustable in size.

11. Cake baking process according to claim 1, characterized in that a baking frame (1,30) is used, which has at least one scale division (21).

12. Cake baking process according to claim 11, characterized in that a baking frame (1,30) is used, which has a scale division on its external surface.

13. Cake baking process according to claim 12, characterized in that a baking frame (1,30) is used, in which overlapping lateral surfaces (1 to 17; 31,32) of the baking frame (1, 30) are provided for size adjustment.

14. Cake baking process according to claim 12, characterized in that a baking frame is used, which consists of four segments (2 to 5).

15. Cake baking process according to claim 14, characterized in that the used baking frame (1,30) has segments (2 to 5), which consist respectively of two lateral surfaces standing at right angles to each other.

16. Cake baking process according to claim 14, characterized in that two lateral surfaces (15, 16) of the segments (2,3) overlap and that the segments (2 to 5) form a rectangle.

17. Cake baking process according to claim 14, characterized in that two clips respectively (6,7; 33,34) are provided for connection of the overlapping lateral surfaces (15, 16; 31,32).

18. Cake baking process according to claim 14, characterized in that one clip (6) is firmly connected with one of the two overlapping lateral surfaces (15, 16).

19. Cake baking process according to claim 14, characterized in that the clip (6) is positioned at the end of the lateral surface (16).

20. Cake baking process according to claim 1, characterized by utilization of a baking frame (1,30) and/or oven shelf (18) which is made of high-grade steel, normal steel or of heat-resistant plastic.

21. Cake baking process according to claim 1, characterized by utilization of a baking frame (1,30) and/or oven shelf (18) which bears a non-stick coating.

22. Cake baking process according to claim 1, characterized in that a baking frame (1,30) and/or oven shelf (18) is used, which bears a Teflon coating (Teflon is a trade name).

23. Cake baking process according to claim 1, characterized in that the area of the oven shelf (18) is larger than the area of the baking frame (1,30) with maximum possible adjustment.

24. Oven shelf for implementation of the process according to claim 1, characterized in that the oven shelf (101) consists of a strong, flat metal sheet (102) which has a large number of perforations (103), that the edges of the metal sheet (102) are angled at least partially downwards to at least one lateral edge (105) and that the at least one lateral edge (105) also has perforations (106), and that the perforations (103, 106) are close together and narrow tie bars (104) are provided between them.

25. Oven shelf according to claim 24, characterized in that the at least one lateral edge (105) is guided without interruption round the metal sheet (102).

26. Oven shelf according to claim 24, characterized in that the perforations (103, 106) have a circular shape or the shape of a regular hexagon.

27. Oven shelf according to claim 24, characterized in that the at least one lateral edge (105) is folded down along a tie bar line (104a, 104b 104c, 104d) of the metal sheet (102).

28. Oven shelf according to claim 24, characterized in that the edges (107) of the at least one lateral edge (105) are welded together at the corners of the metal sheet (102).

29. Oven shelf according to claim 24, characterized in that the metal sheet (102) is made of high-grade steel, normal steel or of heat-resistant plastic.

30. Oven shelf according to claim 29, characterized in that the oven shelf (101) bears a non-stick coating.

31. Oven shelf according to claim 30, characterized in that the oven shelf (101) bears a Teflon coating (Teflon is a trade name).

32. Oven shelf according to claim 24, characterized in that the oven shelf (101) forms the base plate (102a) for a placeable edge mould (120).

33. Oven shelf according to claim 32, characterized in that the edge mould (120) is shaped in the manner of a side ring of a cake tin (flan tin).

34. Oven shelf according to claim 32, characterized in that the edge mould (120) has perforations (121).

35. Oven shelf according to claim 24, characterized in that the metal sheet (102) has a rectangular or square shape.

36. Oven shelf according to claim 24, characterized in that the metal sheet (102) has a circular shape.

37. Baking frame for baking cakes, which is placeable on an oven shelf for implementation of a baking process, in which the baking frame is placed loosely on an oven shelf, and in which the cake mixture is filled into the space limited by the baking frame and oven shelf, and in which the cake mixture filled into this space is baked, characterized in that at least one bracket (310, 320, 324, 325) is provided for modification of the shape of the baking frame (301, 330, 331).

38. Baking frame according to claim 37, characterized in that the bracket (310) of the baking frame (301, 330, 331) has two arms (302, 303) and a base side (304).

39. Baking frame according to claim 37, characterized in that the arms (302, 303) of the bracket (310) are arms (302, 303) contacting external surfaces (311) of the baking frame (301).

40. Baking frame according to claim 37, characterized in that the baking frame (301, 330, 331) is made of spring band steel.

41. Baking frame according to claim 37, characterized in that a set of brackets with varying base side lengths is provided.

42. Baking frame according to claim 37, characterized in that the base side (304) of the bracket (310) is adjustable in its length.

43. Baking frame according to claim 37, characterized in that the arms (302, 303) of the bracket (310) have a length which corresponds at least to the height of the baking frame (301).

44. Baking frame according to claim 37, characterized in that the baking frame has a round, rectangular, star-shaped, rosette-shaped or similar shape.

45. Baking frame according to claim 37, characterized in that the baking frame (331) has holders (334, 335) for the mounting of the arms (302, 303) of the at least one bracket (310).

46. Baking frame according to claim 37, characterized in that the baking frame (301, 330, 331) is adjustable in its size.

47. Baking frame for placing on an oven shelf for baking cakes for implementation of the process according to claim 1 characterized in that the baking frame (201, 230) is adjustable in its size and has at least one scale division (221).

48. Baking frame according to claim 47, characterized in that the baking frame (201) has a rectangular shape with length-adjustable sides.

49. Baking frame according to claim 47, characterized in that the baking frame (230) has a round shape.

50. Baking frame according to claim 47, characterized in that the scale division (221) is positioned on an external surface of the baking frame (201, 230).

51. Baking frame according to claim 47, characterized in that overlapping lateral surfaces (214 to 217; 231, 232) of the baking frame (201, 230) are provided for size adjustment.

52. Baking frame with rectangular shape according to claim 48, characterized in that the baking frame (201) consists of four segments (202 to 205).

53. Baking frame according to claim 52, characterized in that the segments (202 to 205) consist respectively of two lateral surfaces standing at right angles to each other.

54. Baking frame according to claim 52 or 53, characterized in that two lateral surfaces (215, 216) of the segments (202, 203) respectively overlap and that the segments (202 to 205) form a rectangle.

55. Baking frame according to claim 51, characterized in that two clips respectively (206, 207; 233, 234) are provided for connection of the overlapping lateral surfaces (215, 216; 231, 232).

56. Baking frame according to claim 55, characterized in that one clip (206) is connected firmly with one of the two overlapping lateral surfaces (215, 216).

57. Baking frame according to claim 55, characterized in that the clip (206) is positioned at the end of the lateral surface (216).

58. Baking frame according to claim 47, characterized in that the baking frame (201, 230) is made of high-grade steel, normal steel, spring steel and/or stainless steel or heat-resistant plastic.

59. Baking frame according to claim 47, characterized in that the baking frame (201, 230) bears a non-stick coating.

60. Baking frame according to claim 47, characterized in that the baking frame (201, 230) bears a Teflon coating (Teflon is a trade name).

61. Baking frame according to claim 47, characterized in that the area of the oven shelf (218) is larger than the area of the baking frame (201, 230) with maximum possible adjustment.

## Revendications

1. Procédé de cuisson de gâteaux, dans lequel une pellicule mince de cuisson est placée entre une grille de four de cuisson et un châssis de cuisson, et dans lequel de la pâte à gâteau est versée dans l'espace délimité par le châssis de cuisson et la grille de four de cuisson et la pellicule mince de cuisson, et dans lequel la pâte versée dans cet espace est cuite au four, caractérisé en ce qu'on utilise une grille de four de cuisson en forme de grille (18), qui comporte des ouvertures (45) et des barrettes entretoises (46), et dans laquelle les bords de la tôle sont au moins en partie repliés vers le bas au niveau d'au moins un bord latéral (47) et que ledit au moins un bord latéral (47) comporte également des ouvertures (45) et des barrettes entretoises (46).

2. Procédé de cuisson de gâteaux selon la revendication 1, caractérisé en ce qu'il est utilisé une grille de four de cuisson, dans laquelle ledit au moins un bord latéral (47) entoure en continu la grille de four de cuisson (18).

3. Procédé de cuisson de gâteaux selon la revendication 1, caractérisé en ce qu'il est utilisé une grille de four de cuisson (18) dans laquelle les ouvertures (45) ont une forme circulaire ou la forme d'un hexagone régulier.

4. Procédé de cuisson de gâteaux selon la revendication 1, caractérisé en ce qu'il est utilisé une grille de four de cuisson dans laquelle les ouvertures (45) sont très proches les unes des autres et en ce qu'il est prévu entre elles des barrettes entretoises (46) étroites.

5. Procédé de cuisson de gâteaux selon la revendication 1, caractérisé en ce qu'au moins un bord latéral (47) est replié en angle droit le long d'une bande de barrettes entretoises de la grille de four de cuisson (18).

6. Procédé de cuisson de gâteaux selon la revendication 4, caractérisé en ce qu'il est utilisé une grille de four de cuisson (18) dans laquelle les rives dudit au moins un bord latéral (47) sont soudées ensemble an niveau des angles (48, 49) de la tôle (18).

7. Procédé de cuisson de gâteaux selon la revendication 1, caractérisé en ce qu'il est utilisé un châssis de cuisson en forme de grille (1, 30) destiné à être placé sur la grille de four de cuisson (18), qui comporte des ouvertures (41) et des barrettes entretoises (42).

8. Procédé de cuisson de gâteaux selon la revendication 1, caractérisé en ce qu'il est utilisé une grille de four de cuisson (18), qui a une forme rectangulaire ou carrée, ou une forme ronde.

9. Procédé de cuisson de gâteaux selon la revendication 1, caractérisé en ce qu'il est utilisé un châssis de cuisson (1, 30), destiné à être placé sur la grille de four de cuisson (18), qui a une forme circulaire ou rectangulaire.

10. Procédé de cuisson de gâteaux selon la revendication 1, caractérisé en ce qu'il est utilisé un châssis de cuisson (1, 30), dont on peut faire varier les dimensions.

11. Procédé de cuisson de gâteaux selon la revendication 1, caractérisé en ce qu'il est utilisé un châssis de cuisson (1, 30) qui comporte au moins une échelle de graduations (21).

12. Procédé de cuisson de gâteaux selon la revendication 11, caractérisé en ce qu'il est utilisé un châssis de cuisson (1, 30), qui comporte une échelle de graduations sur sa face extérieure.

13. Procédé de cuisson de gâteaux selon la revendication 12, caractérisé en ce qu'il est utilisé un châssis de cuisson (1, 30), dans lequel il est prévu, pour faire varier les dimensions, des faces latérales (1 à 17; 31, 32) du châssis de cuisson (1, 30) se chevauchant.

14. Procédé de cuisson de gâteaux selon la revendication 12, caractérisé en ce qu'il est utilisé un châssis de cuisson qui se compose de quatre segments (2 à 5).

15. Procédé de cuisson de gâteaux selon la revendication 14, caractérisé en ce que le châssis de cuisson utilisé (1, 30) comporte des segments (2 à 5), qui se composent respectivement de deux faces latérales disposées à angle droit l'une par rapport à l'autre.

16. Procédé de cuisson de gâteaux selon la revendication 14, caractérisé en ce que respectivement deux faces latérales (15, 16) des segments (2, 3) se chevauchent mutuellement, et en ce que les segments 2 à 5 forment un rectangle.

17. Procédé de cuisson de gâteaux selon la revendication 14, caractérisé en ce que respectivement deux agrafes (6, 7; 33, 34) sont prévues pour relier ensemble les faces latérales (15, 16; 31, 32) se chevauchant mutuellement.

18. Procédé de cuisson de gâteaux selon la revendication 14, caractérisé en ce qu'une agrafe (6) est solidement reliée à une des deux faces latérales (15, 16) se chevauchant mutuellement.

19. Procédé de cuisson de gâteaux selon la revendication 14, caractérisé en ce que l'agrafe (6) est disposée à l'extrémité de la face latérale (16).

20. Procédé de cuisson de gâteaux selon la revendication 1, caractérisé par l'utilisation d'un châssis de cuisson (1, 30) et/ou une grille de four de cuisson (18), qui est ou sont réalisé(s) en acier spécial, en acier ordinaire ou en matière plastique réfractaire.

21. Procédé de cuisson de gâteaux selon la revendication 1, caractérisé par l'utilisation d'un châssis de cuisson (1, 30) et/ou d'une grille de four de cuisson (18), qui comporte(nt) un revêtement anti-adhésif.

22. Procédé de cuisson de gâteaux selon la revendication 1, caractérisé en ce qu'il est utilisé un châssis de cuisson (1, 30) et/ou une grille de four de cuisson (18), qui comporte(nt) un revêtement de Téflon (Téflon correspondant à la marque déposée).

23. Procédé de cuisson de gâteaux selon la revendication 1, caractérisé en ce que la surface de la grille de four de cuisson (18) est plus grande que la surface du châssis de cuisson (1, 30), lorsque celui-ci est déployé dans sa dimension maximale possible.

24. Grille de four de cuisson pour la mise en oeuvre du procédé selon la revendication 1, caractérisée en ce que la grille de four de cuisson (101) se compose d'une tôle forte plane (102), qui comporte une pluralité d'ouvertures (103), en ce que les bords de la tôle (102) sont repliés en angle droit vers le bas au moins de manière partielle au niveau d'au moins un bord latéral (105) et en ce que ledit au moins un bord latéral (105) présente également des ouvertures (106) et en ce que les ouvertures (103, 106) sont très rapprochées les unes des autres et en ce qu'il est prévu entre elles des barrettes entretoises étroites (104).

25. Grille de four de cuisson selon la revendication 24, caractérisée en ce que ledit au moins un bord latéral (105) est disposé en continu sur tout le pourtour de la tôle (102).

26. Grille de four de cuisson selon la revendication 24, caractérisée en ce que les ouvertures (103, 106) ont une forme circulaire ou ont la forme d'un hexagone régulier.

27. Grille de four de cuisson selon la revendication 24, caractérisée en ce que ledit au moins un bord latéral (105) est replié en angle droit le long d'une bande de barrettes entretoises (104a, 104b, 104c, 104d) de la tôle (102).

28. Grille de four de cuisson selon la revendication 24, caractérisée en ce que les rives (107) dudit au moins un bord latéral (105) sont soudées ensemble au niveau des angle de la tôle (102).

29. Grille de four de cuisson selon la revendication 24, caractérisée en ce que la tôle (102) est réalisée en acier spécial, en acier ordinaire ou en matière plastique réfractaire.

30. Grille de four de cuisson selon la revendication 29, caractérisée en ce que la grille de four de cuisson (101) comporte un revêtement anti-adhésif.

31. Grille de four de cuisson selon la revendication 30, caractérisée en ce que la grille de cuisson (101) comporte un revêtement de Téflon (Téflon correspondant à la marque déposée).

32. Grille de four de cuisson selon la revendication 24, caractérisée en ce que la grille de four de cuisson (101) constitue la plaque de fond en tôle (102a) pour un moule périphérique (120) destiné à être placé sur celle-ci.

33. Grille de four de cuisson selon la revendication 32, caractérisée en ce que le moule périphérique (120) est réalisé de la même façon que la couronne latérale d'un moule à gâteaux (moule à tarte).

34. Grille de four de cuisson selon la revendication 32, caractérisée en ce que le moule périphérique (120) comporte des ouvertures (121).

35. Grille de four de cuisson selon la revendication 24, caractérisée en ce que la tôle (102) a une forme rectangulaire ou carrée.

36. Grille de four de cuisson selon la revendication 24, caractérisée en ce que la tôle (102) a une forme circulaire.

37. Châssis de cuisson pour la cuisson de gâteaux, qui est destiné à être placé sur une grille de four de cuisson, pour la réalisation d'un processus de cuisson au four, dans lequel le châssis de cuisson est placé libre sur une grille de four de cuisson, et dans lequel la pâte à gâteau est versée dans l'espace délimité par le châssis de cuisson et la grille de four de cuisson, et dans lequel la pâte versée dans cet espace est cuite, caractérisé en ce qu'il est prévu, pour la modification de la forme du châssis de cuisson (301, 330, 331) au moins un étrier (310, 320, 324, 325).

38. Châssis de cuisson selon la revendication 37, caractérisé en ce que l'étrier (310) du châssis de cuisson (301, 330, 331) comporte deux branches (302, 303) et un côté de base (304).

39. Châssis de cuisson selon la revendication 37, caractérisé en ce que les branches (302, 303) de l'étrier (310) sont des branches (302, 303) qui sont appliquées contre les faces extérieures (311) du châssis de cuisson (301).

40. Châssis de cuisson selon la revendication 37, caractérisé en ce que le châssis de cuisson (301, 330, 331) est réalisé à partir de bande d'acier à ressorts.

41. Châssis de cuisson selon la revendication 37, caractérisé en ce qu'il est prévu un jeu d'étriers ayant des longueurs de côté de base différentes.

42. Châssis de cuisson selon la revendication 37, caractérisé en ce que le côté de base (304) de l'étrier (310) est réglable en longueur.

43. Châssis de cuisson selon la revendication 37, caractérisé en ce que les branches (302, 303) de l'étrier (310) ont une longueur qui correspond au moins à la hauteur du châssis de cuisson (301).

44. Châssis de cuisson selon la revendication 37, caractérisé en ce que le châssis de cuisson a une forme ronde, rectangulaire, la forme d'une étoile, la forme d'une rosace ou une forme similaire.

45. Châssis de cuisson selon la revendication 37, caractérisé en ce que le châssis de cuisson (331) comporte des dispositifs d'arrêt (334, 335) destinés à recevoir les branches (302, 303) dudit au moins un étrier (310).

46. Châssis de cuisson selon la revendication 37, caractérisé en ce qu'il est possible de faire varier la dimension du châssis de cuisson (301, 330, 331).

47. Châssis de cuisson destiné à être placé sur une grille de four de cuisson pour la cuisson de gâteaux pour la mise en oeuvre du procédé selon la revendication 1, caractérisé en ce qu'il est possible de faire varier la dimension du châssis de cuisson (201, 230) et que celui-ci comporte au moins une échelle de graduations (221).

48. Châssis de cuisson selon la revendication 47, caractérisé en ce que le châssis de cuisson (201) a une forme rectangulaire, avec des côtés dont il est possible de faire varier la longueur.

49. Châssis de cuisson selon la revendication 47, caractérisé en ce que le châssis de cuisson (230) a une forme ronde.

50. Châssis de cuisson selon la revendication 47, caractérisé en ce que l'échelle de graduations (221) est disposée sur une face extérieure du châssis de cuisson (201, 230).

51. Châssis de cuisson selon la revendication 47, caractérisé en ce qu'il est prévu, pour faire varier les dimensions, des faces latérales (214 à 217; 231, 232) du châssis de cuisson (201, 230), qui se chevauchent.

52. Châssis de cuisson de forme rectangulaire selon la revendication 48, caractérisé en ce que le châssis de cuisson (201) se compose de quatre segments (202 à 205).

53. Châssis de cuisson selon la revendication 52, caractérisé en ce que les segments (202 à 205) se composent respectivement de deux face latérales disposées en angle droit l'une par rapport à l'autre.

54. Châssis de cuisson selon la revendication 52 ou 53, caractérisé en ce que respectivement deux faces latérales (215, 216) des segments (202, 203) se chevauchent mutuellement, et en ce que les segments (202 à 205) forment un rectangle.

55. Châssis de cuisson selon la revendication 51, caractérisé en ce que respectivement deux agrafes (206, 207; 233, 234) sont prévues pour relier ensemble les faces latérales (215, 216; 231, 232) qui se chevauchent respectivement.

56. Châssis de cuisson selon la revendication 55, caractérisé en ce qu'une agrafe (206) est solidement reliée à une des deux faces latérales (215, 216) qui se chevauchent.

57. Châssis de cuisson selon la revendication 55, caractérisé en ce que l'agrafe (206) est disposée à l'extrémité de la face latérale (216).

58. Châssis de cuisson selon la revendication 47, caractérisé en ce que le châssis de cuisson (201, 230) est réalisé en acier spécial, en acier ordinaire, en acier à ressorts et/ou en acier inoxydable ou en matière plastique réfractaire.

59. Châssis de cuisson selon la revendication 47, caractérisé en ce que le châssis de cuisson (201, 230) comporte un revêtement anti-adhésif.

60. Châssis de cuisson selon la revendication 47, caractérisé en ce que le châssis de cuisson (201, 230) comporte un revêtement de Téflon (Téflon correspondant à la marque déposée).

61. Châssis de cuisson selon la revendication 47, caractérisé en ce que la surface de la grille de four de cuisson (210) est plus grande que la surface du châssis de cuisson (201, 230) lorsque celui-ci est déployé dans sa dimension maximale possible.
